# EUROPEAN PATENT SPECIFICATION

(11) **EP 4 163 767 B1**
(45) Date of publication and mention of the grant of the patent: **29.04.2026**
(21) Application number: 20943648.4
(22) Date of filing: 10.09.2020
(51) Int. Cl.: G06F 3/041, G06N 3/08, G06N 3/0442

(54) **DEVICE AND METHOD FOR REDUCING DISPLAY OUTPUT LAG OF TOUCH INPUT**
VORRICHTUNG UND VERFAHREN ZUR REDUZIERUNG DER ANZEIGEAUSGABEVERZÖGERUNG EINER BERÜHRUNGSEINGABE
DISPOSITIF ET PROCÉDÉ PERMETTANT DE RÉDUIRE UN RETARD DE SORTIE D'UNE ENTRÉE TACTILE

(30) Priority: 03.07.2020 KR 20200082301
(43) Date of publication of application: 12.04.2023
(73) Proprietor: Samsung Electronics Co., Ltd., Suwon-si, Gyeonggi-do 16677 (KR)
(72) Inventor: SYDORENKO, Dmytro, Suwon-si, Gyeonggi-do 16677 (KR); KUSHNIRENKO, Roman, Suwon-si, Gyeonggi-do 16677 (KR); ALKHIMOVA, Svitlana, Suwon-si, Gyeonggi-do 16677 (KR); VYSOTSKYI, Andrii, Suwon-si, Gyeonggi-do 16677 (KR); NESTERENKO, Serhii, Suwon-si, Gyeonggi-do 16677 (KR); BOROZENETS, Sergii, Suwon-si, Gyeonggi-do 16677 (KR)
(74) Representative: Appleyard Lees IP LLP
(86) International application number: PCT/KR2020/012255
(87) International publication number: WO 2022/004945

(56) References cited:
- KR-A- 20140 103 777
- KR-A- 20160 058 117
- KR-A- 20170 084 118
- KR-A- 20180 010 555
- KR-A- 20190 089 446
- US-A1- 2017 177 146

## Description

### Technical Field

The disclosure relates to a device and method for reducing a lag or delay of a display output relative to a touch input. More particularly, the disclosure relates to a device and method for reducing a delay of a display output by predicting a future touch event from a touch input received by a device and directly rendering an output image generated based on predicted touch event information on a buffer that is being scanned by the display.

### Background Art

These days, a touch screen is a basic input mechanism used in a wide range of interactive devices such as smartphones, tablet personal computers (PCs), and entertainment systems. US 2017/177146 A1 (SKALJAK BOJAN [US] ET AL) describes examples of the related art.

In a mobile device, such as, a smartphone, a tablet PC, etc., which is recently mostly considered as a human interface device (HID), a stylus pen, which is a sort of a digitizer pen capable of writing or drawing, as well as a touch input using a finger, are increasingly applied as an input device. An input using the stylus pen enables a more detailed input than an input with a finger and supports functions such as detailed drawing and writing, etc.

The popularity of touch screens may arise from natural touch and movement interactions. Users may manipulate movement on a virtual space by touching a touch screen which is a real object. For example, when a user draws on a touch screen with a stylus pen, an image is displayed on the screen, giving the user the feeling of actually drawing on paper. Thus, in this case, a latency between a user's action and a system's response may destroy the illusion of direct object manipulation.

As soon as the user recognizes the latency, the illusion of direct manipulation begins to collapse. For example, when the user recognizes that a line head of writing or drawing follows a nib of the stylus pen with a slight gap, the user may not feel any longer like the device is coupled with the movement of the nib of the stylus pen. Thus, the perceived reality of virtual reality may degrade.

The effect of a lag or delay of an output relative to an input may become worse as the stylus pen moves fast on the touch screen. In writing or drawing using the stylus pen, a nib of the stylus pen continuously moves on the touch screen due to the nature of writing or drawing. In this case, the nib may move a significant distance from the line head, and sometimes, may move in the opposite direction to a line configuration direction.

As a result, a technique for reducing a delay of a display output corresponding to a touch input is required.

The above information is presented as background information only to assist with an understanding of the disclosure. No determination has been made, and no assertion is made, as to whether any of the above might be applicable as prior art with regard to the disclosure.

### Disclosure

### Technical Problem

Aspects of the disclosure are to address at least the above-mentioned problems and/or disadvantages and to provide at least the advantages described below. Accordingly, an aspect of the disclosure is to provide a device and method for reducing a delay of a display output of a touch input by predicting coordinates of a touch event after at least one frame by using real input coordinates of the touch event and touch information of the touch event, and outputting an image predicted before a real input.

Another aspect of the disclosure also is to provide a device and method for reducing a delay of a display output by directly rendering an output image generated using predicted touch event information on a buffer that is being scanned by a display.

Additional aspects will be set forth in part in the description which follows and, in part, will be apparent from the description, or may be learned by practice of the presented embodiments.

### Technical Solution

In accordance with an aspect of the disclosure, a method of reducing a display output delay of a touch input by a device is provided. The method includes receiving a touch event as a touch input, obtaining input coordinates corresponding to position coordinates where the touch event occurs and touch characteristics corresponding to touch information of the touch event, based on the touch input, obtaining predicted coordinates of a touch event after at least one frame, based on the input coordinates and the touch characteristics, obtaining output coordinates of an image to be displayed on the display based on the input coordinates and the predicted coordinates, obtaining an output image based on the output coordinates and the touch characteristics, generating a rendering layer for rendering the output image in a buffer being scanned by the display, and outputting the output image on the display by rendering the output image on the rendering layer.

In accordance with another aspect of the disclosure, a device for reducing a display output delay of a touch input is provided. The device includes a display including an input module configured to receive a touch event from an outside source and an output module configured to output an image, a memory configured to store a program including one or more instructions, and at least one processor configured to execute the one or more instructions of the program stored in the memory, in which the processor is further configured to, by executing the one or more instructions, receive the touch event as a touch input by controlling the input module, obtain input coordinates corresponding to position coordinates where the touch event occurs and touch characteristics corresponding to touch information of the touch event, based on the touch input, obtain predicted coordinates of a touch event after at least one frame, based on the input coordinates and the touch characteristics, obtain output coordinates of an image to be displayed on the display based on the input coordinates and the predicted coordinates, obtain an output image based on the output coordinates and the touch characteristics, generate a rendering layer for rendering the output image

in a buffer being scanned by the display, and output the output image on the display by rendering the output image on the rendering layer.

A computer-readable recording medium has stored therein a program for executing at least one of embodiments of the disclosed method on a computer.

### Advantageous Effects

Aspects of the disclosure provide devices and methods capable of reducing a delay of a display output of a touch input.

Other aspects, advantages, and salient features of the disclosure will become apparent to those skilled in the art from the following detailed description, which, taken in conjunction with the annexed drawings, discloses various embodiments of the disclosure.

### Description of Drawings

The above and other aspects, features, and advantages of certain embodiments of the disclosure will be more apparent from the following description taken in conjunction with the accompanying drawings.
FIG. 1 is a schematic view of a method, performed by a device, of reducing a delay of a display output of a touch input, according to an embodiment of the disclosure.
FIG. 2 is a block diagram of a device according to an embodiment of the disclosure.
FIG. 3 is a flowchart of a method of reducing a delay of a display output of a touch input, according to an embodiment of the disclosure.
FIG. 4 is a view for describing an operation, performed by a device, of obtaining input coordinates and touch characteristics from a touch input, according to an embodiment of the disclosure.
FIG. 5 is a view for describing an operation, performed by a device, of obtaining input coordinates and touch characteristics from a touch input, according to an embodiment of the disclosure.
FIG. 6 is a view for describing an operation, performed by a device, of obtaining predicted coordinates from input coordinates and touch characteristics, according to an embodiment of the disclosure.
FIGS. 7A and 7B are views showing an example where a device outputs an image on a display based on a touch input, according to various embodiments of the disclosure.
FIG. 8 is a view showing an example where a device predicts a future touch event and generates an output image based on predicted touch event information, according to an embodiment of the disclosure.
FIG. 9 is a view for describing a difference between predicted coordinates predicted by a device and real input coordinates, according to an embodiment of the disclosure.
FIG. 10 is a view showing an experiment result with respect to a difference between predicted coordinates predicted by a device and real input coordinates, according to an embodiment of the disclosure.
FIG. 11 is a view for describing a line-racing scheme in an operation, performed by a device, of displaying an output image, according to an embodiment of the disclosure.
FIG. 12 is a view for describing a draw-pad synchronization scheme in an operation, performed by a device, of displaying an output image, according to an embodiment of the disclosure.
FIG. 13 is a block diagram of a memory in a device according to an embodiment of the disclosure.
FIG. 14 is a view for describing a rendering and buffer replacement operation when a device uses a double buffer, according to an embodiment of the disclosure.

The same reference numerals are used to represent the same elements throughout the drawings.

### Mode for Invention

The following description with reference to the accompanying drawings is provided to assist in a comprehensive understanding of various embodiments of the disclosure as defined by the claims.

It includes various specific details to assist in that understanding, but these are to be regarded as merely exemplary. In addition, descriptions of well-known functions and constructions may be omitted for clarity and conciseness.

The terms and words used in the following description are not limited to the bibliographical meanings, but are merely used by the inventor to enable a clear and consistent understanding of the disclosure. Accordingly, it should be apparent to those skilled in the art that the following description of various embodiments of the disclosure is provided for illustration purposes only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The disclosure provides a method, performed by a device, of reducing a delay of a display output of a touch input. The method may include receiving a touch event as a touch input, obtaining input coordinates corresponding to position coordinates where the touch event occurs and touch characteristics corresponding to touch information of the touch event, based on the touch input, obtaining predicted coordinates of a touch event after at least one frame, based on the input coordinates and the touch characteristics, obtaining output coordinates of an image to be displayed on the display based on the input coordinates and the predicted coordinates, obtaining an output image based on the output coordinates and the touch characteristics, generating a rendering layer in a buffer being scanned by the display, and outputting the output image on the display by rendering the output image on the rendering layer.

The obtaining of the input coordinates corresponding to the position coordinates where the touch event occurs and the touch characteristics corresponding to the touch information of the touch event, based on the touch input may include obtaining the input coordinates based on a contact position of the touch event on the display and obtaining the touch characteristics of the touch event, in which the touch characteristics include at least one of a timestamp of the touch event, a duration of the touch event, a time interval between the touch event and another touch event adjacent thereto on a timeline, a contact angle of the touch event, a direction of a contact gradient of the touch event, and a pressure applied to a contact surface of the touch event.

The obtaining of the input coordinates corresponding to the position coordinates where the touch event occurs and the touch characteristics corresponding to the touch information of the touch event, based on the touch input may include obtaining the input coordinates based on a contact position of the touch event on the display, removing a touch event having the input coordinates that are not changed, by filtering the touch event, and obtaining touch characteristics of the filtered touch event.

The obtaining of the input coordinates corresponding to the position coordinates where the touch event occurs and the touch characteristics corresponding to the touch information of the touch event, based on the touch input may include obtaining the input coordinates based on a contact position of the touch event on the display, removing a touch event having the input coordinates that are not changed, by filtering the touch event, normalizing input coordinates of the filtered touch event, and obtaining touch characteristics of the filtered touch event.

The normalizing of the input coordinates of the filtered touch event may include calculating a difference between input coordinates of a corresponding touch event and input coordinates of a filtered touch event before one from the corresponding touch event on the timeline, converting the calculated difference between the input coordinates into a millimeter unit, and dividing the converted difference between the input coordinates by an average touch event duration Ts.

The average touch event duration Ts may be calculated as Ts = N × Tfr/*n,* Tfr may mean a frame duration, N may mean a dimension of a touch input vector, and n may mean the average number of times a touch event occurs per frame.

The obtaining of the predicted coordinates of the touch event after at least one frame based on the input coordinates and the touch characteristics may include determining whether prediction of information before three frames based on the touch characteristics is possible, obtaining the predicted coordinates based on the information before three frames when prediction of the information before the three frames based on the touch characteristics is possible, determining whether prediction of information before two frames based on the touch characteristics is possible when prediction of the information before the three frames based on the touch characteristics is impossible, obtaining the predicted coordinates based on the information before the two frames when prediction of the information before the two frames based on the touch characteristics is possible, determining whether prediction of information before one frame based on the touch characteristics is possible when prediction of the information before the two frames based on the touch characteristics is impossible, obtaining the predicted coordinates based on the information before the one frame when prediction of the information before the one frame based on the touch characteristics is possible, and obtaining the predicted coordinates based on the input coordinates when prediction of the information before the one frame based on the touch characteristics is impossible.

The obtaining of the predicted coordinates of the touch event after the at least one frame, based on the input coordinates and the touch characteristics may include obtaining the input coordinates and the touch characteristics through a recurrent neural network (RNN) including at least one of a long short-term memory (LSTM) architecture and a gate recurrent unit (GRU) architecture.

The obtaining of the predicted coordinates of the touch event after the at least one frame, based on the input coordinates and the touch characteristics may include obtaining the predicted coordinates based on a database including statistical user input data.

The obtaining of the output coordinates of the image to be displayed on the display based on the input coordinates and the predicted coordinates may include obtaining the output coordinates by weight-combining the input coordinates with the predicted coordinates.

The disclosure provides a device for reducing a display output delay of a touch input. The device may include a display including an input module receiving a touch event from an outside source and an output module outputting an image, a memory storing a program including one or more instructions, and at least one processor configured to execute the one or more instructions of the program stored in the memory. The processor is further configured to, by executing the one or more instructions receive the touch event as a touch input by controlling the input module, obtain input coordinates corresponding to position coordinates where the touch event occurs and touch characteristics corresponding to touch information of the touch event, based on the touch input, obtain predicted coordinates of a touch event after at least one frame, based on the input coordinates and the touch characteristics, obtain output coordinates of an image to be displayed on the display based on the input coordinates and the predicted coordinates, obtain an output image based on the output coordinates and the touch characteristics, generate a rendering layer in a buffer being scanned by the display, and output the output image on the display by rendering the output image on the rendering layer.

The processor may be further configured to, by executing the one or more instructions, obtain the input coordinates based on a contact position of the touch event on the display and, obtain the touch characteristics of the touch event, in which the touch characteristics include at least one of a timestamp of the touch event, a duration of the touch event, a time interval between the touch event and another touch event adjacent thereto on a timeline, a contact angle of the touch event, a direction of a contact gradient of the touch event, and a pressure applied to a contact surface of the touch event.

The processor may be further configured to, by executing the one or more instructions, obtain the input coordinates based on a contact position of the touch event on the display, remove a touch event having the input coordinates that are not changed, by filtering the touch event, and obtain the touch characteristics of the filtered touch event.

The processor may be further configured to, by executing the one or more instructions, obtain the input coordinates based on a contact position of the touch event on the display, remove a touch event having the input coordinates that are not changed, by filtering the touch event, normalize input coordinates of the filtered touch event, and obtain the touch characteristics of the filtered touch event.

The processor may be further configured to, by executing the one or more instructions, calculate a difference between input coordinates of a corresponding touch event and input coordinates of a filtered touch event before one from the corresponding touch event on the timeline, convert the calculated difference between the input coordinates into a millimeter unit, and divide the converted difference between the input coordinates by an average touch event duration Ts.

The processor may be further configured to, by executing the one or more instructions, determine whether prediction of information before three frames based on the touch characteristics is possible, obtain the predicted coordinates based on the information before three frames when prediction of the information before the three frames based on the touch characteristics is possible, determine whether prediction of information before two frames based on the touch characteristics is possible when prediction of the information before the three frames based on the touch characteristics is impossible, obtain the predicted coordinates based on the information before the two frames when prediction of the information before the two frames based on the touch characteristics is possible, determine whether prediction of information before one frame based on the touch characteristics is possible when prediction of the information before the two frames based on the touch characteristics is impossible, obtain the predicted coordinates based on the information before the one frame when prediction of the information before the one frame based on the touch characteristics is possible, and obtain the predicted coordinates based on the input coordinates when prediction of the information before the one frame based on the touch characteristics is impossible.

The processor may be further configured to, by executing the one or more instructions, obtain the input coordinates and the touch characteristics through a recurrent neural network (RNN) including at least one of a long short-term memory (LSTM) architecture and a gate recurrent unit (GRU) architecture.

The processor may be further configured to, by executing the one or more instructions, obtain predicted coordinates from the input coordinates and the touch characteristics based on a database including statistical user input data.

The processor may be further configured to, by executing the one or more instructions, obtain the output coordinates by weight-combining the input coordinates with the predicted coordinates.

The disclosure provides a computer-readable recording medium. The computer-readable recording medium has stored therein a program for executing at least one of embodiments of the disclosed method on a computer.

Hereinafter, embodiments of the disclosure will be described in detail with reference to the attached drawings to allow those of ordinary skill in the art to easily carry out the embodiments of the disclosure. However, the disclosure may be implemented in various forms, and are not limited to the embodiments of the disclosure described herein. To clearly describe the disclosure, parts that are not associated with the description have been omitted from the drawings, and throughout the specification, identical reference numerals refer to identical parts.

Although terms used in embodiments of the disclosure are selected with general terms popularly used at present under the consideration of functions in the disclosure, the terms may vary according to the intention of those of ordinary skill in the art, judicial precedents, or introduction of new technology. In addition, in a specific case, the applicant voluntarily may select terms, and in this case, the meaning of the terms may be disclosed in a corresponding description part of an embodiment of the disclosure. Thus, the terms used in herein should be defined not by the simple names of the terms but by the meaning of the terms and the contents throughout the disclosure.

All terms including technical or scientific terms used herein have the same meaning as commonly understood by those of ordinary skill in the art described herein.

Throughout the entirety of the specification of the disclosure, when it is assumed that a certain part includes a certain component, the term "including" means that a corresponding component may further include other components unless specially described to the contrary. The term used herein such as "unit" or "module" indicates a unit for processing at least one function or operation, and may be implemented in hardware, software, or in a combination of hardware and software.

Throughout the specification, when any portion is "connected" to another portion, it may include not only a case where they are "directly connected", but also a case where they are "electrically connected" with another element therebetween. When a portion is referred to as "comprises" a component, the portion may not exclude another component but may further include another component unless stated otherwise.

The expression "...configured to" used in the disclosure may be exchangeably used with, for example, "...suitable for", "...having the capacity to", ...designed to", "...adapted to", "...made to", or "...capable of", depending on the situation. The term "...configured to" may not necessarily mean "...specially designed to" in terms of hardware. Instead, in a certain situation, the expression "a system configured to..." may mean that the system is "capable of..." together with other devices or parts. For example, the phrase "a processor configured (or set) to perform A, B, and C" may mean a dedicated processor (e.g., an embedded processor) for performing a corresponding operation or a general-purpose processor (e.g., a central processing unit (CPU) or an application processor) capable of performing corresponding operations by executing one or more software programs stored in a memory.

In the disclosure, a 'canvas' may mean a region on which an output is displayed on a display of a device, i.e., a region of a screen. For example, the canvas may be a region where panels included in the display are located.

In the disclosure, an 'input' may mean a touch event applied to the display of the device from outside. For example, the touch event may include a 'touch-down event' where an external object contacts the display, a 'touch-move event' where the external object moves in contact with the display, and a 'touch-up event' where the external object is separated from the display. Each touch event may be an 'input signal' or an 'input' at a specific time.

In the disclosure, a 'timestamp' means a character string indicating a time at which input information is generated or changed. The timestamp is defined to be conveniently used for comparing two or more times or calculating a period, and may be expressed in a consistent form. The timestamp may mean a time at which an event, i.e., an accident is recorded on a computer, and may not mean a time at which the event occurs. For example, an input after one timestamp from a specific input may mean an input corresponding to a first touch-down event, touch-move event, or touch-up event occurring after the specific input.

In the disclosure, a 'timeline' may mean arrangement of events in chronological order. For example, a touch event preceding a specific touch event by one on the timeline may mean a final touch event occurring before the specific touch event.

In the disclosure, a 'frame' may mean a sheet of a still image output on the display. That is, this corresponds to a case where a moving image is generated by displaying consecutive scenes, and may be applied in a job such as image output, real-time drawing and writing, etc. For example, data after one frame may mean image data of a screen updated on a scene next to a corresponding output image.

In the disclosure, 'coordinates' may mean a part in a canvas where a particular input, predicted value, or output is located. For example, the coordinates may be expressed as a relative panel distance (x, y) from a preset zero-point (0, 0) in a two-dimensional (2D) canvas.

In the disclosure, 'input coordinates' may mean coordinates of an input, i.e., a touch event, on the canvas. 'Predicted coordinates' may mean predicted input coordinates after at least one frame, which are predicted by a processor from a touch input. 'Output coordinates' may mean coordinates where an image is displayed on the canvas.

In the disclosure, 'characteristics' may mean information or data. For example, touch characteristics may indicate characteristics, information, or data related to a touch input.

Hereinafter, the disclosure will be described with reference to the accompanying drawings.

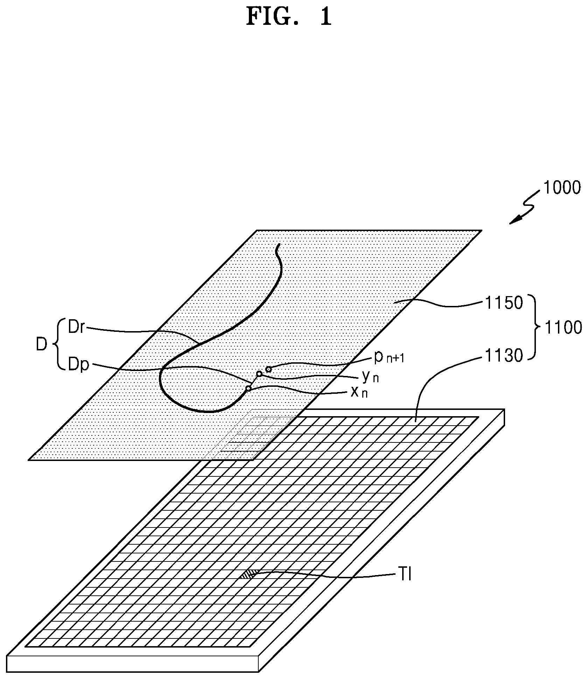

FIG. 1 is a schematic diagram of a method, performed by a device 1000, of reducing a delay of an output of a display 1100 relative to a touch input according to an embodiment of the disclosure.

Referring to FIG. 1, the device 1000 may include the display 1100 that may include an input module 1130 and an output module 1150. The device 1000 may receive a touch event as a touch input TI through the input module 1130 of the display 1100 and obtain input coordinates xₙ and touch characteristics vₙ from the touch input TI. The device 1000 may obtain predicted coordinates pₙ₊₁of a touch event after at least one frame from the input coordinates xₙ and the touch characteristics vₙ. The device 1000 may obtain output coordinates yₙ of an image to be displayed through an output module 1150 of the display 1100 from the obtained input coordinates xₙ and the predicted coordinates pₙ₊₁. The device 1000 may obtain an output image D from the output coordinates yₙ and the touch characteristics vₙ, and output the output image D including a predicted output image part Dp and a real output image part Dr onto the display 1100.

The device 1000 may receive a touch input from an outside source and process the touch input to convert the touch input into an image and output the image. The device 1000 may include at least one of, for example, a smartphone, a tablet personal computer (PC), a mobile phone, a video phone, an electronic book (e-book) reader, a desktop PC, a laptop PC, a netbook computer, a workstation, a server, a personal digital assistant (PDA), a portable multimedia player (PMP), an MP3 player, mobile medical equipment, a camera, a wearable device, a home appliance, and other mobile or non-mobile computing devices. However, the device 1000 is not limited to the above-described examples, and may include any type of devices that receive a touch input and process and output the received input.

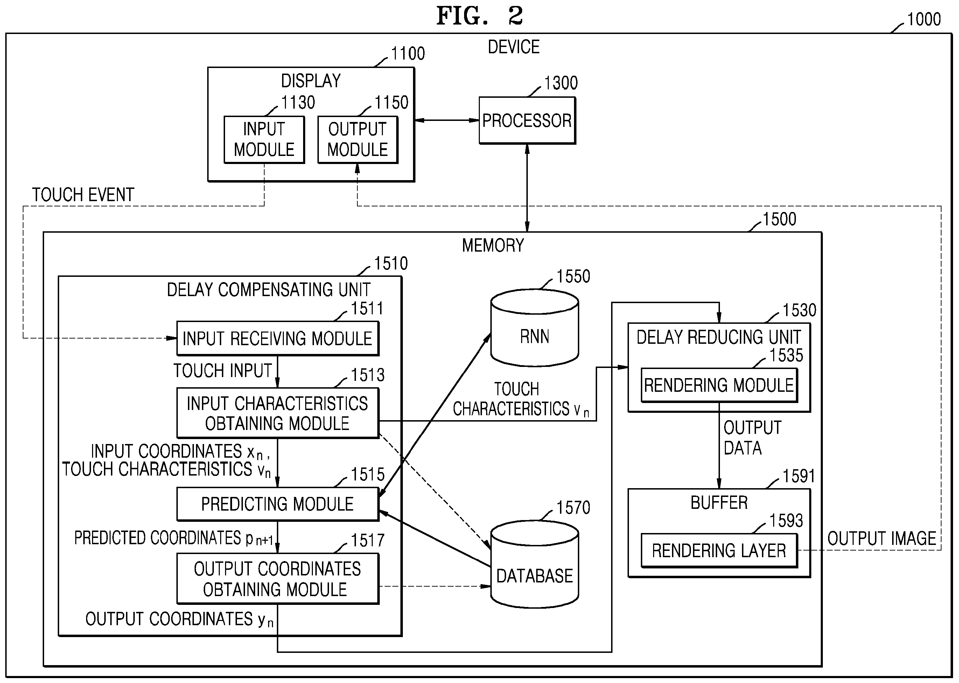

FIG. 2 is a block diagram of the device 1000 according to an embodiment of the disclosure.

Referring to FIG. 2, the device 1000 may include the display 1100 including the input module 1130 and the output module 1150, a processor 1300, and a memory 1500. All components shown in FIG. 2 are not essential components of the device 1000. The device 1000 may be implemented by more or fewer components than the components shown in FIG. 2.

The display 1100 may include the input module 1130 that receives a touch event from an outside source and the output module 1150 that outputs an image.

The input module 1130 may include a touch pad or a touch panel. The input module 1130 may receive a touch from an external device (e.g., a digitizer pen, writing instrument, or a user's body) and obtain a touch event from the received touch. In an embodiment, the input module 1130 may receive the touch input through a contact capacitive method, a pressure resistance film method, an infrared sensing method, a surface ultrasonic conduction method, an integral tension measurement method, a piezo effect method, etc. In an embodiment, the processor 1300 of the device 1000 may remove noise (e.g., a contactless component caused by a hand shake, static electricity, etc.) from the input received through the input module 1130.

The output module 1150 may receive a user input for controlling or setting an output displayed on the display 1100. The output module 1150 may include a panel. The output module 1150 may include, for example, at least one of a liquid crystal display (LCD), a thin film transistor (TFT) LCD, an organic light-emitting diode (OLED), a flexible display, a three-dimensional (3D) display, or an electrophoretic display.

The memory 1500 may store a program to be executed by the processor 1300 to control an operation of the device 1000. The memory 1500 may store a program including at least one instruction for controlling an operation of the device 1000. The memory 1500 may store instructions and program codes, which are readable by the processor 1300. In an embodiment, the processor 1300 may be implemented to execute instructions or codes of a program stored in the memory 1500. The memory 1500 may store data input to or output from the device 1000.

The memory 1500 may include a storage medium of at least one type of a flash memory type, a hard disk type, a multimedia card micro type, a card type memory (e.g., a secure digital (SD) or extreme digital (XD) memory, etc.), a random-access memory (RAM), a static random-access memory (SRAM), a read-only memory (ROM), an electrically erasable programmable read-only memory (EEPROM), a programmable read-only memory (PROM), a magnetic memory, a magnetic disk, an optical disk, or the like.

The programs stored in the memory 1500 may be classified into a plurality of modules according to functions thereof. For example, the memory 1500 may include a delay compensating unit 1510, which includes an input receiving module 1511, an input characteristics obtaining module 1513, a predicting module 1515, and an output coordinates obtaining module 1517, and a delay reducing unit 1530 including a rendering module 1535. The memory 1500 may include a recurrent neural network (RNN) 1550, a database 1570, and a buffer 1591.

The processor 1300 may control overall operations of the device 1000. For example, the processor 1300 may overall control the display 1100, the input module 1130, the output module 1150, the memory 1500, etc., by executing programs stored in the memory 1500.

The processor 1300 may include hardware elements for performing arithmetic, logic, and input/output operations and signal processing. The processor 1300 may include at least one of a central processing unit (CPU), a microprocessor, a graphic processing unit (GPU), application specific integrated circuits (ASICs), digital signal processors (DSPs), digital signal processing devices (DSPDs), programmable logic devices (PLDs), or field programmable gate arrays (FPGAs), but is not limited thereto.

The processor 1300 may be configured, by executing the delay compensating unit 1510 stored in the memory 1500, to predict a touch event after at least one frame of a touch input received by the device 1000 and output an image obtained through predicted information before reception of a real touch input of a frame, thereby compensating for the effect of a delay of an output of the image relative to a real-time touch input.

Hereinbelow, a function of each module included in the delay compensating unit 1510 stored in the memory 1500 will be described in more detail.

The processor 1300 may, by executing the input receiving module 1511 stored in the memory 1500, receive the touch event from the outside as a touch input through the input module 1130. The touch event may be input from an outside source including a device such as a digitizer pen or a user's body part.

The processor 1300 may, by executing the input characteristics obtaining module 1513 stored in the memory 1500, obtain the input coordinates xₙ and the touch characteristics vₙ of a current frame n from the received input. The input coordinates xn may correspond to position coordinates where the touch event occurs, and may be set to a position on a display canvas where the touch input is received. The touch characteristics vn may correspond to touch information of the touch event, and at least one of a timestamp of the touch event, a duration of the touch event, a time interval between the touch event and another touch event adjacent thereto on a timeline, a contact angle of the touch event, a direction of a contact gradient of the touch event, or a pressure applied to a contact surface of the touch event. The input coordinates xₙ and the touch characteristics vₙ may be transmitted to the database 1570 stored in the memory 1500 and stored, and update the database 1570.

The processor 1300 may, by executing the predicting module 1515 stored in the memory 1500, obtain the predicted coordinates pₙ₊₁ of the touch event after at least one frame from the input coordinates xₙ and the touch characteristics vₙ of the current frame n. For example, the processor 1300 may, by executing the predicting module 1515, predict a position where a touch event occurs in a future frame, by collectively considering information such as the input coordinates xₙ of the current touch input, a speed of the touch event, a contact pressure of the touch event, a contact gradient of the touch event, etc. In an embodiment, the predicting module 1515 may calculate the predicted coordinates pₙ₊₁ by using the RNN 1550 or use information stored in the database 1570 to obtain the predicted coordinates pₙ₊₁.

The RNN 1550 stored in the memory 1500, which is a type of an artificial neural network, may be characterized in that connection between units has a recurrent architecture. Such a recurrent architecture allows a state to be stored in a neural network to enable modeling of a time-varying dynamic characteristics. Unlike a non-recurrent neural network, a recurrent artificial neural network may process an input in a sequence form by using a memory. Thus, the recurrent artificial neural network may be useful for processing data having time-varying characteristics such as voice recognition or cursive recognition in the disclosure.

The processor 1300 may, by executing the predicting module 1515 stored in the memory 1500, obtain the predicted coordinates pₙ₊₁ after at least one frame by using the RNN 1550 including at least one of a long short-term memory (LSTM) architecture or a gate recurrent unit (GRU) architecture. For example, the processor 1300 may, by executing the predicting module 1515 that obtains the predicted coordinates pₙ₊₁ by using the RNN 1550, thereby obtaining the predicted coordinates pₙ₊₁ by reflecting information (xₙ, vₙ) of the touch event of the current frame. By using the RNN 1550, the reliability of the predicted coordinates pₙ₊₁ for the future touch event may be improved.

The database 1570 stored in the memory 1500 may include a set of a huge amount of data. The database 1570 may include statistical user input data. The processor 1300 may, by executing the predicted module 1515 stored in the memory 1500, obtain the predicted coordinates pₙ₊₁ of the touch event after at least one frame by using a machine learning (ML) method based on the database 1570 including the statistical user input data. For example, the processor 1300 may, by executing the predicting module 1515 configured to obtain the predicted coordinates pₙ₊₁ using the database 1570 including the statistical user input data, obtain the predicted coordinates pₙ₊₁ by reflecting statistical user information considering a user's writing or drawing preference. When statistical user information for a particular user is reflected, the reliability of prediction of the future touch event may be improved.

The database 1570 may include movement characteristic data according to a property of each external input device (e.g., a stylus pen or a finger).

The processor 1300 may, by executing the output coordinate obtaining module 1517 stored in the memory 1500, obtain the output coordinates yₙ from the input coordinates xₙ of the current frame and the predicted coordinates pₙ₊₁ of the touch event after at least one frame. The output coordinates yₙ may mean coordinates of an image to be output by the device 1000 through a display. In an embodiment, the output coordinates yₙ may calculate the input coordinates xₙ and the predicted coordinates pₙ₊₁ by weight combination based on the reliability of a prediction result. The output coordinates yₙ may be transmitted to the database 1570 stored in the memory 1500 and stored, and update the database 1570.

The processor 1300 may, by executing the delay reducing unit 1530 stored in the memory 1500, directly render an output image on the buffer 1591 being scanned by the display. In this case, when the image is displayed, a line-racing method or a draw pad synchronization method to be described later may be used. When the output image is directly rendered on the buffer 1591 being scanned by the display, scanning may be performed simultaneously with rendering, and thus scanning may not wait until completion of rendering. A scanning wait time may be removed, thereby reducing a time required for overall display output. When the image is directly rendered on the buffer 1591 being scanned, a single buffer may be used, and thus a buffer replacement process may be omitted. Thus, a time required in the buffer replacement process may be reduced, thus further reducing the time required for overall display output.

The processor 1300 may generate a rendering layer 1593 for rendering the output image on the buffer 1591 by executing one or more instructions stored in the memory 1500.

The processor 1300 may, by executing the rendering module 1535 included in the delay reducing unit 1530 stored in the memory 1500, obtain the output image from the output coordinates yₙ and the touch characteristics vₙ and render the output image in the rendering layer 1593 of the buffer 1591 stored in the memory 1500 to output the output image on the display. For example, the processor 1300 may, by executing the rendering module 1535, output the output image reflecting properties such as a thickness of a line, a transparency of the line, etc., determined from the touch characteristics vₙ such as a contact gradient, a contact pressure, etc., in a position on the display corresponding to the output coordinates yₙ.

A device according to the related art that displays an output with respect to a touch input outputs a corresponding image using input data of a frame in which a touch event is received, such that a delay often occurs in a process of data recognition and processing into an image. When a double buffer or a triple buffer is used in a process of updating the image displayed on the display, the effect of an output delay corresponding to a time required for rendering and a time for buffer replacement may occur as the image is rendered on a back buffer and the back buffer and a front buffer displayed on the display are replaced with each other. Thus, in a job of drawing, writing, etc., where real-time input touch data has to be rendered into an image, an excessive output delay of three or more frames may occur.

The device 1000 according to an embodiment of the disclosure may predict an input after at least one frame from a touch input received by the device 1000 and output a predicted image, by including the delay compensating unit 1510 stored in the memory 1500. For prediction of the image, an RNN or an ML method of a database including user data may be applied. With application of an artificial neural network (the RNN) or the ML method, the reliability of prediction may be improved. By predicting a touch event after a real touch input and displaying a prediction result before reception of the touch input, the effect of a delay of an output of the image relative to a real-time touch input may be reduced and real-time emulation may be possible.

Thus, the device 1000 according to an embodiment of the disclosure may directly render the output image on the buffer 1591 being scanned by the display, by including the delay reducing unit 1530 stored in the memory 1500. As a result, in display of the image, scanning of the image may be performed simultaneously with rendering, such that scanning may wait until rendering is completed. That is, a scanning wait time may be removed, thereby reducing a time required for overall display output. When the image is directly rendered on the buffer 1591 being scanned, a single buffer may be used, and thus a buffer replacement process may be omitted. Thus, a time required in the buffer replacement process may be skipped, thus further reducing the time required for overall display output.

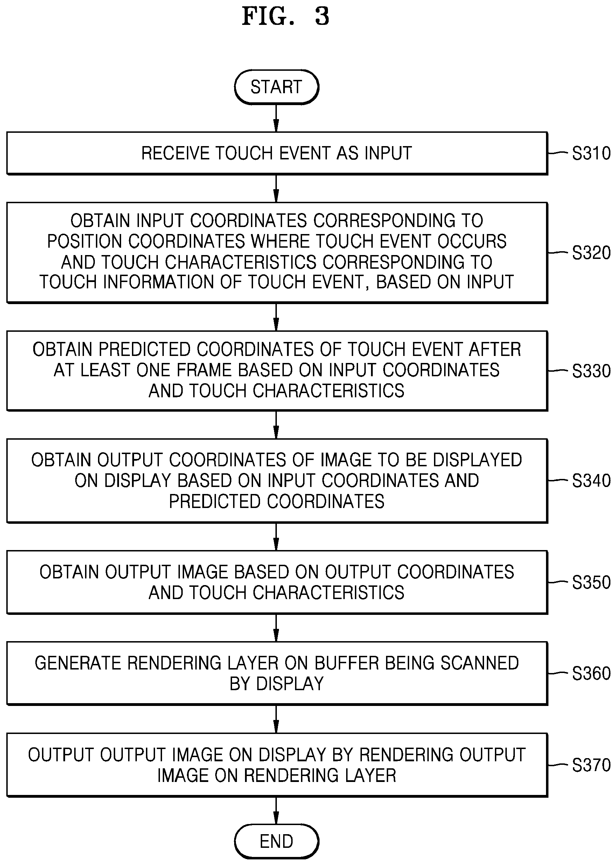

FIG. 3 is a flowchart of a method of reducing a delay of a display output of a touch input, according to an embodiment of the disclosure.

In operation S310, a touch event may be received as an input from an outside source. For example, a device may receive a touch event from an object such as a digitizer pen, writing instrument, etc., or receive a touch event from a user's body part, as described with reference to FIG. 2.

In operation S320, input coordinates corresponding to position coordinates where the touch event occurs and touch characteristics corresponding to touch information of the touch event may be obtained from the input. For example, the input coordinates may be obtained from a contact position of the touch event on a display (a touch screen). In an embodiment, the touch characteristics may include at least one of a timestamp of the touch event, a duration of the touch event, a time interval between the touch event and another touch event adjacent thereto on a timeline, a contact angle between an external object and the display (the touch screen), a direction of a contact gradient of the touch event, and a pressure applied to a contact surface of the display (the touch screen) of the touch event.

In operation S330, predicted coordinates of a touch event after at least one frame may be obtained from the input coordinates and the touch characteristics. In an embodiment, the predicted coordinates may be predicted coordinates of a touch event before one to three frames. For example, the predicted coordinates may be calculated through an RNN or an ML method using a database. For example, the predicted coordinates may generate an output image before input of real coordinates. In an embodiment, when the output image is generated before reception of the touch input, a time required for data processing may be reduced and an output delay caused by a reaction speed of an input module, a time required for processing input data, etc., may be reduced.

In operation S340, output coordinates of an image to be displayed on the display may be obtained from the input coordinates and the predicted coordinates. For example, the output coordinates may correspond to the image displayed on the display through the output module. For example, the output coordinates may be position coordinates of the output image on the canvas. The output coordinates may be calculated as a combination of input coordinates of the current frame and predicted coordinates before at least one frame. The output coordinates may be obtained by weight-combining the input coordinates with the predicted coordinates based on the reliability of the predicted coordinates.

In operation S350, an output image may be obtained from the output coordinates and the touch characteristics. For example, the output image may be obtained by determining a position of an image based on the output coordinates and reflecting a property (e.g., a thickness of a line, a transparency of the line, a texture of the line, etc.) of the image based on touch characteristics such as a contact angle, a contact pressure, etc. By using a combination of information of a really-received touch input and predicted touch information before at least one frame to obtain the output image, a display output delay of the touch input may be reduced as described above.

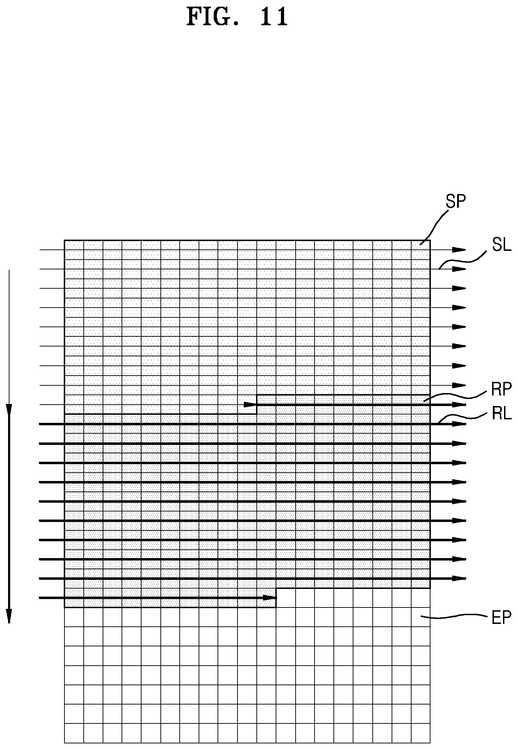

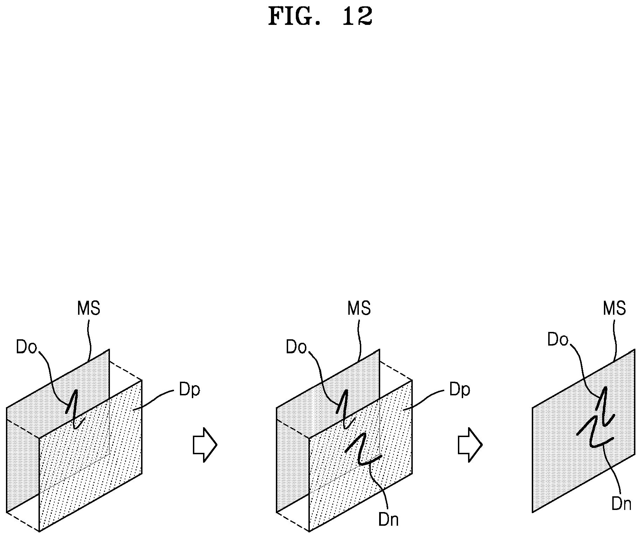

In operation S360, a rendering layer may be generated on a buffer being scanned by the display. For example, the rendering layer may include a layer for directly rendering the output image on the buffer being scanned by the display. In an embodiment, the output image of the rendering layer may be output to the display through a line-racing method to be described with reference to FIG. 11 or a draw pad synchronization method to be described with reference to FIG. 12.

In operation S370, by rendering the output image on the rendering layer, the output image may be output on the display. For example, data of the rendering layer may be updated and displayed on a display screen along a buffer scan line or may be displayed on the display screen through synchronization such as capture, etc. In an embodiment, in display output corresponding to a touch input, by directly rendering output data reflecting predicted information on a buffer being scanned on a display, a time delay between a touch input event and an image output event corresponding thereto may be largely reduced.

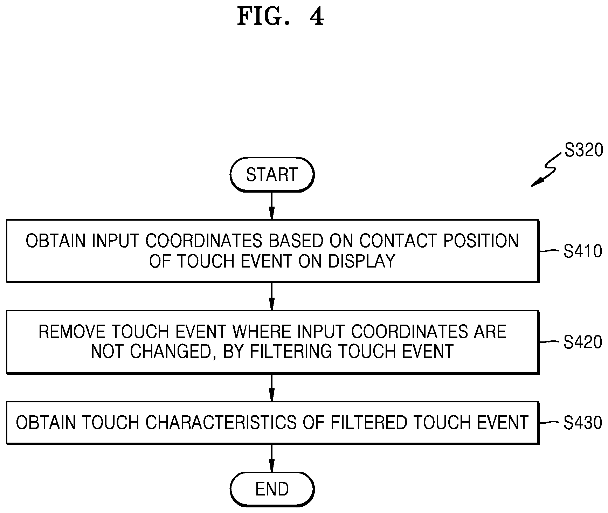

FIG. 4 is a view for describing operation S320, performed by a device, of obtaining input coordinates and touch characteristics from a touch input, according to an embodiment of the disclosure.

In operation S410, input coordinates may be obtained from a contact position of a touch event on a display. For example, the input coordinates may be set to a position on the display canvas where the touch event occurs. The position of the touch event on the display canvas may be expressed as a relative panel distance from a preset zero point on a 2D canvas.

In operation S420, the touch event where the input coordinates are not changed may be filtered and removed. Before touch characteristics corresponding to touch information of touch events are obtained after input coordinates of all of the touch events are obtained, a touch event for which touch characteristics are to be obtained may be filtered to reduce the amount of data to be processed. For example, in a job of drawing or writing, when the input coordinates are not changed, it may be determined that drawing or writing is not performed. Thus, among successive touch events on the timeline, touch events where input coordinates are not changed may be regarded as the same event as an initial touch event in each succession. In an embodiment, the touch events where the input coordinates are not changed may be merged into the initial touch event among the successive touch events.

In operation S430, touch characteristics of a filtered touch event may be obtained. In an embodiment, the number of filtered touch events may be less than touch events before filtering. Thus, when touch characteristics are obtained for filtered touch events after filtering instead of obtaining touch characteristics for all the touch events, the amount of data that has to be processed by the processor may be reduced and a processing speed may increase. In this case, a time required for an operation of obtaining touch information and touch characteristics from a touch input may be reduced, and a total time required for the device to output the touch input on the display may also be reduced.

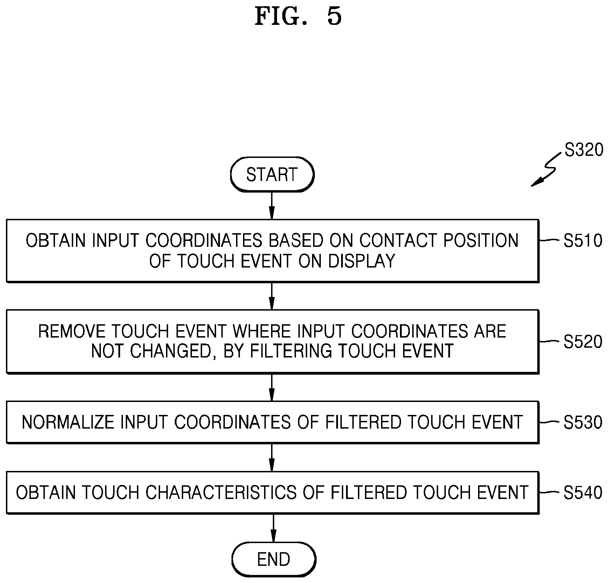

FIG. 5 is a view for describing operation S320, performed by a device, of obtaining input coordinates and touch characteristics from a touch input, according to an embodiment of the disclosure.

In operation S510, input coordinates may be obtained from a contact position of a touch event on a display. The operation of obtaining the input coordinates from the contact position of the touch event on the display has been described in detail with reference to FIG. 4, and thus will not be described in detail. In operation S520, the touch event where the input coordinates are not changed may be filtered and removed. The operation of filtering and removing the touch event where the input coordinates are not changed has been described in detail with reference to FIG. 4, and thus will not be described in detail.

In operation S530, input coordinates of a filtered touch event may be normalized. In an embodiment, the filtered touch event remains after a plurality of touch events are removed from total touch events, and the remaining touch events do not have the same time interval on the timeline. Thus, in an embodiment, the operation of normalizing the input coordinates of the filtered touch event may be further included.

The operation of normalizing the input coordinates of the filtered touch event may include calculating a difference between input coordinates of a corresponding touch event and input coordinates of a filtered touch event before one from the corresponding touch event on the timeline, converting the calculated difference between the input coordinates into a millimeter unit, and dividing the converted difference between the input coordinates by an average touch event duration Ts. Herein, the average touch event duration Ts may be calculated as Ts = N × Tfr/*n*, Tfr may mean a frame duration, N may mean a dimension of a touch input vector, and n may mean the average number of times a touch event occurs per frame. By converting the calculated difference between the input coordinates into the millimeter unit, a result value may be prevented from depending on a resolution of a display screen.

In operation S540, touch characteristics of a filtered touch event may be obtained. The operation of obtaining the touch characteristics of the filtered touch event has been described in detail with reference to FIG. 4, and thus will not be described in detail.

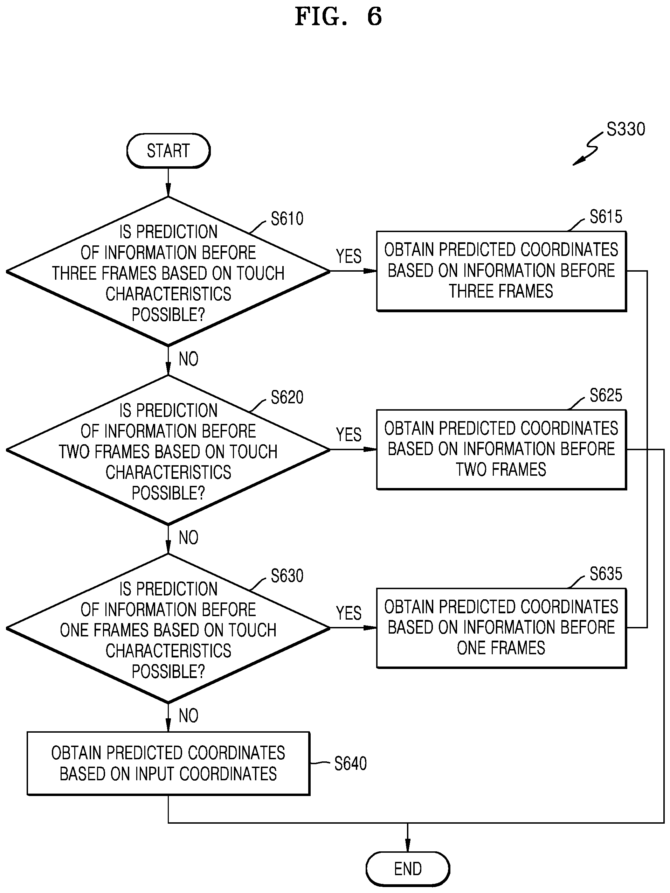

FIG. 6 is a view for describing an operation, performed by a device, of obtaining predicted coordinates from input coordinates and touch characteristics, according to an embodiment of the disclosure.

Referring to FIG. 6, a display output corresponding to a touch input may be displayed by being delayed by about three frames in average due to a time required for an operation of processing the touch input and displaying an output image on a display. Thus, a method, performed by a device according to an embodiment of the disclosure, of reducing a delay of a display output relative to a touch input may include an operation of obtaining predicted coordinates of a touch event after one to three frames from input coordinates and touch characteristics. For example, a touch event before three frames may be predicted, a touch event before two frames may be predicted, or a touch event before one frame may be predicted, in a possible order.

In operation S610, it may be determined whether prediction of information before three frames is possible from touch characteristics.

According to a determination result of operation S610, when prediction of information before three frames is possible, predicted coordinates may be obtained from information before three frames in operation S615, and when prediction of information before three frames is impossible, it may be determined in operation S620 whether prediction of information before two frames is possible.

According to a determination result of operation S620, when prediction of information before two frames is possible, predicted coordinates may be obtained from information before two frames in operation S625, and when prediction of information before two frames is impossible, it may be determined in operation S630 whether prediction of information before one frame is possible.

According to a determination result of operation S630, when prediction of information before one frame is possible, predicted coordinates may be obtained from information before one frame in operation S635, and when prediction of information before one frame is impossible, predicted coordinates may be obtained from real input coordinates in operation S640.

In the following operation, output coordinates of an image to be displayed on the display may be obtained from the input coordinates and the predicted coordinates. Thus, in an embodiment, information of a predicted touch event before one to three frames may be reflected to the output coordinates of the image to be displayed on the display. In an embodiment, when prediction of information before one frame is impossible, the input coordinates and the predicted coordinates may be set to be the same as each other and the input coordinates and the output coordinates may be set to be the same as each other.

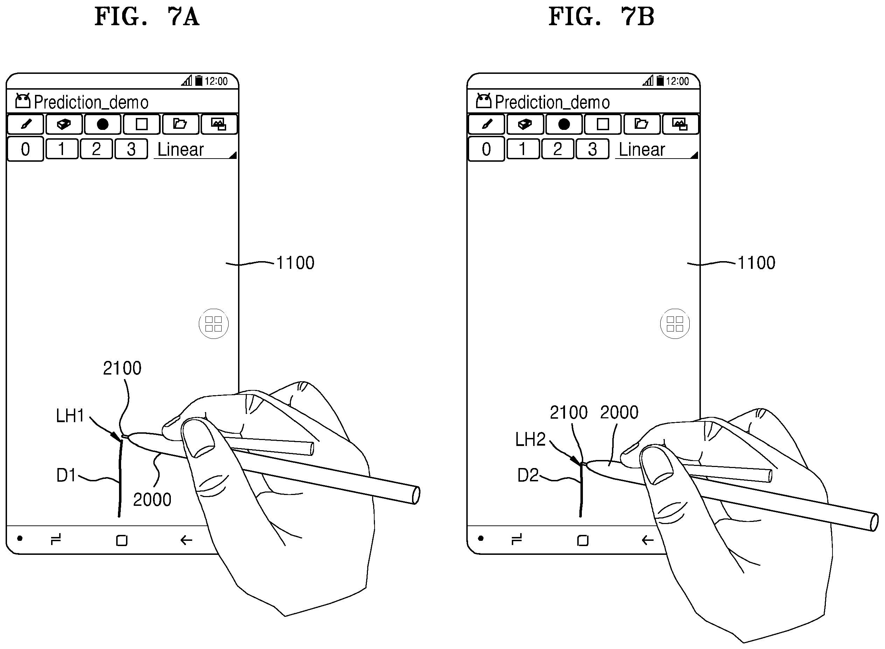

FIGS. 7A and 7B are views showing an example where a device outputs an image on a display based on a touch input, according to various embodiments of the disclosure.

FIG. 7A shows a case where the input coordinates and the predicted coordinates are set to be the same as each other in an embodiment of the disclosure, and FIG. 7B shows a case where a touch event after at least one frame is predicted and a prediction result is reflected to the output coordinates in an embodiment of the disclosure.

Referring to FIG. 7A, a nip 2100 of a stylus pen 2000 and a line head LH1 of an output image D1 displayed on the display 1100 are partially spaced apart from each other. In an embodiment, the case where the input coordinates and the predicted coordinates are set to be the same as each other may mean a case where prediction of a touch event after at least one frame is impossible, with reference to FIG. 6 described above. This may be the same as a case where predicted information is not reflected or a future touch event is not predicted. In an embodiment, when the touch event after at least one frame is not predicted or the prediction result is not reflected, an output delay corresponding to a gap between the line head LH1 and the nip 2100 may occur in the display output D1 of the touch input through the stylus pen 2000.

Referring to FIG. 7B, there is no or small difference between a position of the nip 2100 of the stylus pen 2000 and a position of a line head LH2 of an output image D2 displayed on the display 1100. In an embodiment, as the device 1000 predicts a touch event after at least one frame of a touch input received from the stylus pen 2000 and outputs an image obtained through predicted information before reception of a real touch input, the output of the image may not be delayed relative to the real-time touch input and a gap may not be recognized between the line head LH2 of the output D2 and the input position through the nip 2100 of the stylus pen 2000.

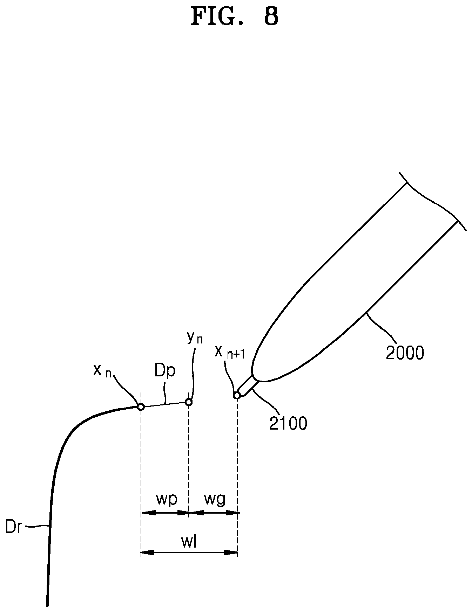

FIG. 8 is a view showing an example where a device predicts a future touch event and generates an output image based on predicted touch event information, according to an embodiment of the disclosure.

Referring to FIG. 8, in an n^{th} frame, the nip 2100 of the stylus pen 2000 may give a touch input at a position of the input coordinates xₙ. When the device processes an operation of receiving a touch input of the n^{th} frame, processing the touch input, and displaying a corresponding output image on a display, the nip 2100 may move to a touch input position xₙ₊₁ of an (n+1)^{th} frame. Thus, when the device generates an output image Dr to the position of the real touch input coordinates xₙ of the n^{th} frame, an output delay of wl may occur between a position xₙ of a line head and a position xₙ₊₁ of the nip 2100 at a moment when an image is updated.

According to an embodiment of the disclosure, the device may obtain the output coordinates yₙ of the n^{th} frame by using the input coordinates xₙ of the n^{th} frame and predicted coordinates of the (n+1)^{th} frame. The device may generate an output image including the real output image Dr to the position of the real touch input coordinates xₙ of the n^{th} frame and the predicted output image Dp to the position of the output coordinates yₙ of the n^{th} frame. In this case, as an output delay between the position yₙ of the line head and the position xₙ₊₁ of the nip 2100 at a moment when an image is updated is wg, the output delay may be reduced by a length wp of the predicted output image Dp compared to the output delay wl corresponding to a case where the predicted coordinates are not used.

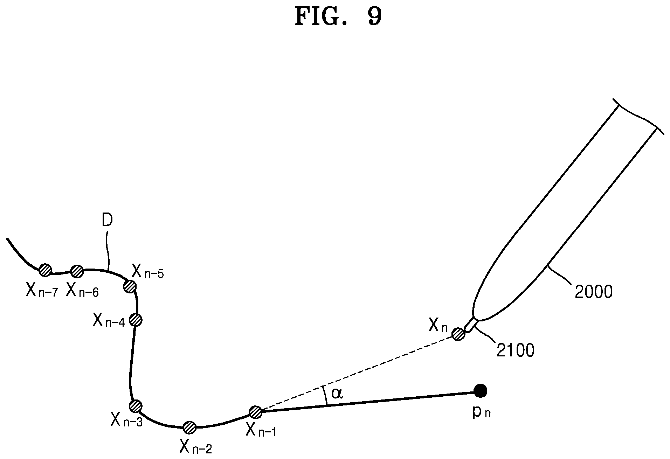

FIG. 9 is a view for describing a difference between predicted coordinates predicted by a device and real input coordinates, according to an embodiment of the disclosure.

Referring to FIG. 9, in an (n-1)^{th} frame, a position where a touch event of the n^{th} frame occurs may be predicted and an output image may be generated to the predicted coordinates pₙ. In this case, an error angle α may be generated between the predicted coordinates pₙ of the touch event of the n^{th} frame and the input coordinates xₙ of the real n^{th} frame. The error angle α may indicate an angle between a direction of the nip 2100 of the stylus pen 2000 of the n^{th} frame from the touch input coordinates xₙ₋₁ of the (n-1)^{th} frame and a direction of the predicted coordinates pₙ of the n^{th} frame, and when these directions coincide with each other, α = 0.

A hardware function of the display may have a screen update rate of 60 Hz. For example, the display having a screen update of 60 Hz may have a duration of 16.6 ms per unit frame. Table 1 shows an error with a real touch input when information before one to three frames is predicted from touch input signals previous to the (n-1)^{th} frame.

**[Table 1]**

| Period of Prediction | straight distance **(b)** between real input coordinates xₙ₋₁ of (n-1)^{th} frame and real input coordinates xₙ of n^{th} frame | straight distance **(a)** between real input coordinates xₙ of n^{th} frame and predicted coordinates pₙ of n^{th} frame | Error Rate **(a/b)** |
|---|---|---|---|
| One Frame (16.6 ms) | 0.6085 mm | 0.0728 mm | 11.96 % |
| Two Frames (33.3 ms) | 1.3059 mm | 0.2433 mm | 18.63 % |
| Three Frames (50 ms) | 1.9412 mm | 0.4901 m | 25.25 % |

In one experimental example, an error of 11.96 % relative to a real touch input of the frame is shown when information before one frame is predicted, and an error of 18.63 % relative to the real touch input of the frame is shown when information before two frames is predicted, and an error of 25.25 % relative to the real touch input of the frame is shown when information before three frames is predicted.

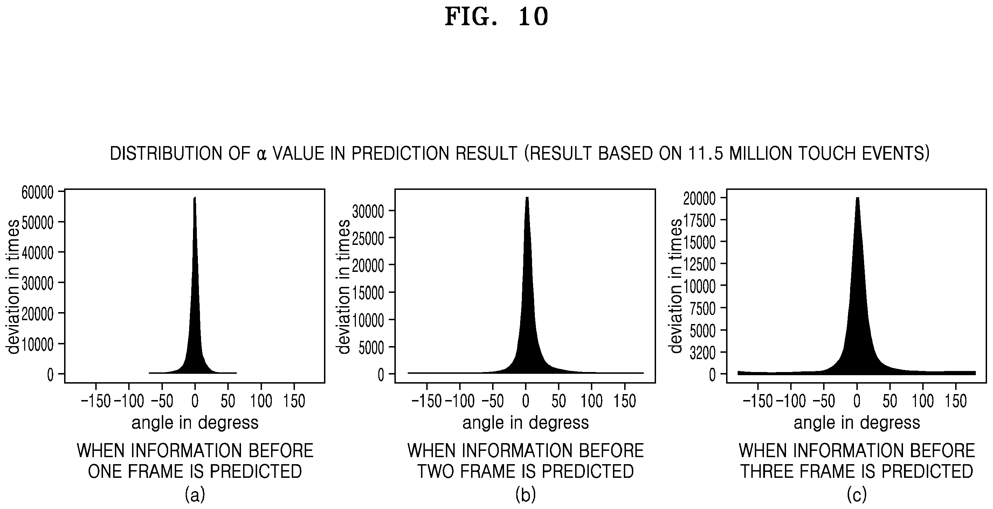

FIG. 10 is a view showing an experiment result with respect to a difference α between predicted coordinates pₙ predicted by a device and real input coordinates xₙ, according to an embodiment of the disclosure.

FIG. 10 shows a distribution of the error angle α when a display device having a duration of 16.6 ms per unit frame performs experiment for generating predicted coordinates from 11.5 million touch events.

Referring to part (a) of FIG. 10, it may be seen that the case where prediction after one frame is predicted from really input touch event series may have a higher accuracy than the case part (b) of FIG. 10 where information after two frames is predicted or the case part (c) of FIG. 10 where information after three frames is predicted. However, it may be seen that when information after one to three frames is predicted, most results are close to α = 0, such that an operation of predicting a touch event after at least one frame has considerable accuracy.

FIG. 11 is a view for describing a line-racing scheme in an operation, performed by a device, of displaying an output image, according to an embodiment of the disclosure.

Referring to FIG. 11, an operation, performed by a display, of drawing a new image on a buffer refers to rendering, and an operation of displaying the new image stored in the buffer on a screen refers to scanning. Rendering and scanning may be performed in a linear order from left to right and top to bottom in a pixel. In an embodiment, a time required for scanning one frame in a display having a screen update rate of 60 Hz may be about 15 ms to about 16 ms.

The processor 1300 may directly render the output image on the buffer being scanned by the display. When the output image is directly rendered on the buffer being scanned, rendering needs to be finished before a pixel reaches a scan out line, such that timings for rendering and scanning have to be limited carefully.

Referring to FIG. 11, the processor may generate a rendered panel RP by rendering an output image on a panel EP along a rendering line RL. The rendering line RL may precede a scanning line SL. The scanning line SL may scan the rendered panel RP after the rendered line RL passes, for output on the display. As such, when the line-racing method is applied, scanning may be performed simultaneously with rendering in a single buffer, such that scanning may not need to wait until completion of rendering and a buffer replacement process may be omitted, thus reducing a time for overall display output.

FIG. 12 is a view for describing a draw-pad synchronization scheme in an operation, performed by a device, of displaying an output image, according to an embodiment of the disclosure.

Referring to FIG. 12, in the draw-pad synchronization method, a transparent draw pad Dp may be formed on a screen region MS and a new image Dn may be drawn on the draw pad Dp, and then the draw pad Dp and the screen region MS may be synchronized, thus further displaying the new image Dn on an existing image Do. This method additionally displays the new image Dn while leaving the existing image Do of the screen region MS, and may be applied to a job of drawing or writing.

For example, synchronization between the draw pad Dp and the screen region MS may be achieved by moving the existing image Do of the screen region MS onto the draw pad Dp, capturing the screen region MS and moving the captured image to the background of the draw pad Dp, or moving the new image Dn of the draw pad Dp to the screen region MS.

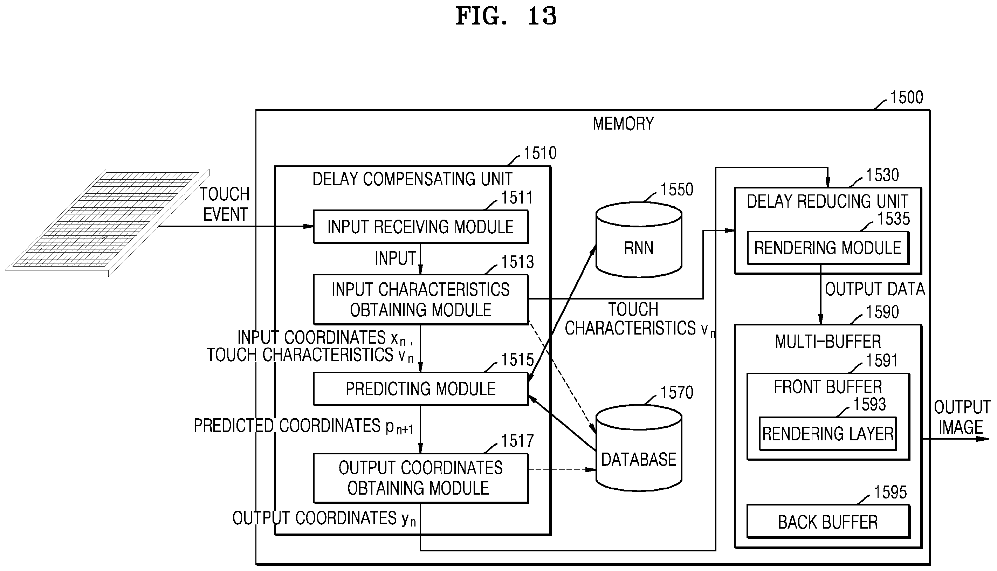

FIG. 13 is a block diagram of the memory 1500 in a device according to an embodiment of the disclosure.

Referring to FIG. 13, the memory 1500 may store programs to be executed by a processor to be described below to control an operation of the device, and the stored programs may be classified into a plurality of modules according to their functions. For example, the memory 1500 may include a delay compensating unit 1510, which includes an input receiving module 1511, an input characteristics obtaining module 1513, a predicting module 1515, and an output coordinates obtaining module 1517, and a delay reducing unit 1530 including a rendering module 1535. The memory 1500 may include a recurrent neural network (RNN) 1550, a database 1570, and a multi-buffer 1590. Modules included in the memory 1500 have been described in detail with reference to FIG. 2, and thus will not be described in detail.

The memory 1500 may include the multi-buffer 1590 including a double buffer or a triple buffer. For example, when rendering is performed using the double buffer, one buffer may be a buffer (a front buffer) where scanning is performed and the other may be a buffer (a back buffer) where a new image of a next frame is being rendered. When scanning of the front buffer is completed, two buffers may be exchanged with each other to scan the image of the next frame on the screen. When the double buffer is used, each frame may wait in the buffer for several ms before scanning after rendering, thus increasing a delay time.

The processor 1300 may directly render the output image on the front buffer 1591 being scanned by the display. For direct rendering on the front buffer 1591, the front buffer 1591 may include the rendering layer 1593. In an embodiment, even when the memory 1500 includes the multi-buffer 1590, the front buffer 1591 may operate in the same manner as the buffer of FIG. 2 and the device may operate similarly to the device shown in FIG. 2, when rendering of the output image is performed in the front buffer 1591.

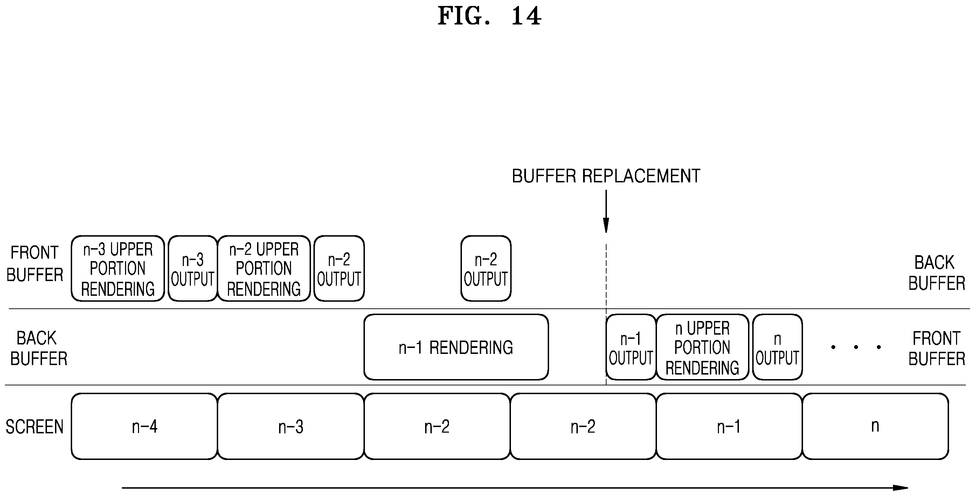

FIG. 14 is a view for describing a rendering and buffer replacement operation when a device uses a double buffer, according to an embodiment of the disclosure.

Referring to FIG. 14, when the device according to an embodiment uses a double buffer, the device may render the output image on the front buffer or the back buffer according to input coordinates of the touch event on the screen. In an embodiment, a rendering speed may be lower than a scanning speed. In this case, referring back to FIG. 11, the scanning line SL may overtake the rendering line RL at a specific time. Thus, the rendered panel RP rendered into a new output image is scanned on the display before the scanning line SL overtakes the rendering line RL, but the panel EP before rendering is scanned on the display after the scanning line SL overtakes the rendering line RL, such that tearing of the output image may occur.

To solve such a problem, a buffer where rendering is to be performed may be selected according to input coordinates of a touch event on the screen. For example, when the input coordinates are in an upper portion of the screen, a panel in the upper portion before the scanning line SL overtakes the rendering line RL may be rendered, and tearing of the output image may not occur in spite of scanning of the panel EL before rendering due to no change in data of a lower portion compared to a previous frame. When the input coordinates are in the lower portion of the screen, scanning may be performed with information of the previous frame before rendering of the new output image, such that a new touch event may not be reflected into the display output. Thus, when the input coordinates are in the lower portion of the screen, the output image may be rendered in the back buffer and the front buffer and the back buffer may be replaced with each other after completion of scanning of the front buffer, thus scanning a new image.

Referring to FIG. 14, a touch event may be in the upper portion of the screen in an (n-3)^{th} frame, an (n-2)^{th} frame, and an n^{th} frame, and the touch event may be in the lower portion the screen in the (n-1)^{th} frame. In this case, in the (n-3)^{th} frame and the (n-2)^{th} frame, the output image corresponding to the touch input may be rapidly displayed by being rendered in the front buffer being scanned on the display. Thereafter, in the (n-1)^{th} frame where the touch event is in the lower portion of the screen, information of the (n-1)^{th} frame may be rendered in the back buffer. Upon completion of the information of the (n-1)^{th} frame, the front buffer and the back buffer may be replaced with each other to output the information of the (n-1)^{th} frame. Thereafter, when there is the touch event in the upper portion of the screen in the n^{th} frame, the output image corresponding to the touch input may be displayed on the display by being rendered in the front buffer after replacement (the back buffer before replacement).

An embodiment of the disclosure may be implemented using a recording medium including a computer-executable command such as a computer-executable programming module. A computer-readable recording medium may be an available medium that is accessible by a computer, and includes all of a volatile medium, a non-volatile medium, a separated medium, and a non-separated medium. The computer-readable recording medium may also include a computer storage medium and a communication medium. The computer storage medium includes all of a volatile medium, a non-volatile medium, a separated medium, and a non-separated medium, which is implemented by a method or technique for storing information such as a computer-readable instruction, a data structure, a programming module, or other data. A communication medium may typically include a computer-readable instruction, a data structure, or other data of a modulated data signal such as a programming module.

The computer-readable storage medium may be provided in the form of a non-transitory storage medium. When the storage medium is 'non-transitory', it means that the storage medium is tangible and does not include signals (e.g., electromagnetic waves), and it does not limit that data is semi-permanently or temporarily stored in the storage medium. For example, the 'non-transitory storage medium' may include a buffer storing data temporarily.

According to an embodiment of the disclosure, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. When distributed online, at least a part of the computer program product (e.g., a downloadable app) may be temporarily generated or at least temporarily stored in the machine-readable storage medium, such as memory of the manufacturer's server, a server of the application store, or a relay server.

In the specification, the term "unit" may be a hardware component like a processor or a circuit, and/or a software component executed by a hardware component like a processor.

A function related to Al according to the disclosure may be performed through a processor and a memory. The processor may include one processor or a plurality of processors. In this case, one processor or a plurality of processors may include a general-purpose processor such as a CPU, an application processor (AP), a digital signal processor (DSP), etc., a graphic-dedicated processor such as a GPU, a vision processing unit (VPU), etc., or an Al-dedicated processor such as a neural processing unit (NPU). One processor or a plurality of processors may control data to be processed according to a predefined operation rule or Al model stored in the memory. When one processor or a plurality of processors include an Al-dedicated processor, the Al-dedicated processor may be designed as a hardware structure specialized for processing a specific Al model.

The predefined operation rule or Al model may be made through training. Herein, when the Al model is made through training, it may mean that a basic Al model is trained based on a learning algorithm by using multiple training data, such that the predefined operation rule or Al model configured to execute desired characteristics (or purpose) may be made. Such training may be performed by an apparatus on which Al according to the disclosure is implemented, or by a separate server and/or system. Examples of a learning algorithm may include, but not limited to, supervised learning, unsupervised learning, semi-supervised learning, or reinforcement learning.

The Al model may include a plurality of neural network layers. Each of the plurality of neural network layers may have a plurality of weight values, and perform a neural network operation through an operation between an operation result of a previous layer and the plurality of weight values. The plurality of weight values of the plurality of neural network layers may be optimized by a training result of the Al model. For example, the plurality of weight values may be updated to reduce or minimize a loss value or a cost value obtained in the Al model during a training process. Examples of the Al neural network may include, but not limited to, a deep neural network (DNN), e.g., a convolutional neural network (CNN), a DNN, a recurrent neural network (RNN), a restricted Boltzmann machine (RBM), a deep belief network (DBN), a bidirectional recurrent deep neural network (BRDNN), a deep Q-network, ETC.

The Al model may be generated through learning. Herein, when the Al model is made through training, it may mean that a basic Al model is trained based on a learning algorithm by using multiple training data, such that the predefined operation rule or Al model configured to execute desired characteristics (or purpose) may be made. The Al model may include a plurality of neural network layers. Each of the plurality of neural network layers may have a plurality of weight values, and perform a neural network operation through an operation between an operation result of a previous layer and the plurality of weight values.

The aforementioned embodiments of the disclosure should be construed as being only illustrative, but should not be constructed as being restrictive from all aspects. For example, each element described as a single type may be implemented in a distributed manner, and likewise, elements described as being distributed may be implemented as a coupled type.

## Claims

1. A method, performed by a device (1000), of reducing a display output delay of a touch input (TI), the method comprising:
receiving a touch event as a touch input (TI);
obtaining input coordinates (xₙ) corresponding to position coordinates where the touch event occurs and touch characteristics (vₙ) corresponding to touch information of the touch event, based on the touch input (TI);
obtaining predicted coordinates (pₙ₊₁) of a touch event after at least one frame, based on the input coordinates (xₙ) and the touch characteristics (vₙ);
obtaining output coordinates (yₙ) of an image to be displayed on the display (1100) based on the input coordinates (xₙ) and the predicted coordinates (pₙ₊₁);
obtaining an output image (D) based on the output coordinates (yₙ) and the touch characteristics (vₙ); and
**characterized by** the method further comprising:
generating a rendering layer (1593) for rendering the output image (D) in a buffer (1591) being scanned by the display (1100); and
outputting the output image (D) onto the display (1100) by rendering the output image (D) on the rendering layer (1593).

2. The method of claim 1, wherein the obtaining of the input coordinates (xₙ) corresponding to the position coordinates where the touch event occurs and the touch characteristics (vₙ) corresponding to the touch information of the touch event, based on the touch input (TI) comprises:
obtaining the input coordinates (xₙ) based on a contact position of the touch event on the display (1100); and
obtaining the touch characteristics (vₙ) of the touch event,
wherein the touch characteristics (vₙ) comprise:
at least one of a timestamp of the touch event,
a duration of the touch event (TS),
a time interval between the touch event and another touch event adjacent thereto on a timeline,
a contact angle of the touch event,
a direction of a contact gradient of the touch event, and
a pressure applied to a contact surface of the touch event.

3. The method of claim 1, wherein the obtaining of the input coordinates (xₙ) corresponding to the position coordinates where the touch event occurs and the touch characteristics (vₙ) corresponding to the touch information of the touch event, based on the touch input (TI) comprises:
obtaining the input coordinates (xₙ) based on a contact position of the touch event on the display (1100);
removing a touch event having the input coordinates (xₙ) that are not changed, by filtering the touch event; and
obtaining touch characteristics (vₙ) of the filtered touch event.

4. The method of claim 1, wherein the obtaining of the input coordinates (xₙ) corresponding to the position coordinates where the touch event occurs and the touch characteristics (vₙ) corresponding to the touch information of the touch event, based on the touch input (TI) comprises:
obtaining the input coordinates (xₙ) based on a contact position of the touch event on the display (1100);
removing a touch event having the input coordinates (xₙ) that are not changed, by filtering the touch event;
normalizing input coordinates (xₙ) of the filtered touch event; and
obtaining touch characteristics (vₙ) of the filtered touch event.

5. The method of claim 1, wherein the obtaining of the predicted coordinates (pₙ₊₁) of the touch event after the at least one frame, based on the input coordinates (xₙ) and the touch characteristics (vₙ) comprises:
obtaining the input coordinates (xₙ) and the touch characteristics (vₙ) through a recurrent neural network (RNN) (1550) comprising at least one of a long short-term memory (LSTM) (1500) architecture and a gate recurrent unit (GRU) architecture.

6. The method of claim 1, wherein the obtaining of the predicted coordinates (pₙ₊₁) of the touch event after the at least one frame, based on the input coordinates (xₙ) and the touch characteristics (vₙ) comprises obtaining the predicted coordinates (pₙ₊₁) based on a database (1570) comprising statistical user input data.

7. The method of claim 1, wherein the obtaining of the output coordinates (yₙ) of the image to be displayed on the display (1100) based on the input coordinates (xₙ) and the predicted coordinates (pₙ₊₁) comprises obtaining the output coordinates (yₙ) by weight-combining the input coordinates (xₙ) with the predicted coordinates (pₙ₊₁).

8. A device (1000) for reducing a display (1100) output delay of a touch input (TI), the device (1000) comprising:
a display (1100) comprising:
an input module (1130) configured to receive a touch event from an outside source, and
an output module (1150) configured to output an image;
a memory (1500) configured to store a program comprising one or more instructions; and
at least one processor (1300) configured to execute the one or more instructions of the program stored in the memory (1500),
wherein the processor (1300) is further configured to, by executing the one or more instructions:
receive the touch event as a touch input (TI) by controlling the input module (1130),
obtain input coordinates (xₙ) corresponding to position coordinates where the touch event occurs and touch characteristics (vₙ) corresponding to touch information of the touch event, based on the touch input (TI),
obtain predicted coordinates (pₙ₊₁) of a touch event after at least one frame, based on the input coordinates (xₙ) and the touch characteristics (vₙ),
obtain output coordinates (yₙ) of an image to be displayed on the display (1100) based on the input coordinates (xₙ) and the predicted coordinates (pₙ₊₁),
obtain an output image (D) based on the output coordinates (yₙ) and the touch characteristics (vₙ), and
**characterized in that** the processor (1300) is configured to:
generate a rendering layer (1593) for rendering the output image (D) in a buffer (1591) being scanned by the display (1100), and
output the output image (D) onto the display (1100) by rendering the output image (D) on the rendering layer (1593).

9. The device (1000) of claim 8, wherein the processor (1300) is further configured to, by executing the one or more instructions:
obtain the input coordinates (xₙ) based on a contact position of the touch event on the display (1100); and
obtain the touch characteristics (vₙ) of the touch event,
wherein the touch characteristics (vₙ) comprise:
at least one of a timestamp of the touch event,
a duration of the touch event Ts,
a time interval between the touch event and another touch event adjacent thereto on a timeline,
a contact angle of the touch event,
a direction of a contact gradient of the touch event, and
a pressure applied to a contact surface of the touch event.

10. The device (1000) of claim 8, wherein the processor (1300) is further configured to, by executing the one or more instructions:
obtain the input coordinates (xₙ) based on a contact position of the touch event on the display 1100,
remove a touch event having the input coordinates (xₙ) that are not changed, by filtering the touch event, and
obtain the touch characteristics (vₙ) of the filtered touch event.

11. The device (1000) of claim 8, wherein the processor (1300) is further configured to, by executing the one or more instructions:
obtain the input coordinates (xₙ) based on a contact position of the touch event on the display (1100),
remove a touch event having the input coordinates (xₙ) that are not changed, by filtering the touch event,
normalize input coordinates (xₙ) of the filtered touch event, and
obtain the touch characteristics (vₙ) of the filtered touch event.

12. The device (1000) of claim 8, wherein the processor (1300) is further configured to, by executing the one or more instructions,
Obtain the input coordinates (xₙ) and the touch characteristics (vₙ) through a recurrent neural network (RNN) (1550) comprising at least one of a long short-term memory (LSTM) (1500) architecture, and a gate recurrent unit (GRU) architecture.

13. The device (1000) of claim 8, wherein the processor (1300) is further configured to, by executing the one or more instructions, obtain predicted coordinates (pₙ₊₁) based on a database (1570) comprising statistical user input data.

14. The device (1000) of claim 8, wherein the processor (1300) is further configured to, by executing the one or more instructions, obtain the output coordinates (yₙ) by weight-combining the input coordinates (xₙ) with the predicted coordinates (pₙ₊₁).

15. A computer-readable recording medium having recorded thereon a program for executing the method according to any one of claims 1 to 7 on a computer.

## Patentansprüche

1. Verfahren, durchgeführt durch eine Vorrichtung (1000), zur Reduzierung der Anzeigeausgabeverzögerung einer Berührungseingabe (TI), wobei das Verfahren Folgendes umfasst:
Empfangen eines Berührungsereignisses als eine Berührungseingabe (TI);
Erhalten von Eingabekoordinaten (xₙ) entsprechend Positionskoordinaten, an denen das Berührungsereignis auftritt, und Berührungseigenschaften (vₙ) entsprechend Berührungsinformationen des Berührungsereignisses, basierend auf der Berührungseingabe (TI);
Erhalten von vorhergesagten Koordinaten (pₙ₊₁) eines Berührungsereignisses nach zumindest einem Rahmen, basierend auf den Eingabekoordinaten (xₙ) und den Berührungseigenschaften (vₙ);
Erhalten von Ausgabekoordinaten (yₙ) eines Bildes, das auf der Anzeige (1100) anzuzeigen ist, basierend auf den Eingabekoordinaten (xₙ) und den vorhergesagten Koordinaten (pₙ₊₁);
Erhalten eines Ausgabebildes (D) basierend auf den Ausgabekoordinaten (yₙ) und den Berührungseigenschaften (vₙ); und
**dadurch gekennzeichnet, dass** das Verfahren ferner Folgendes umfasst:
Erzeugen einer Wiedergabeschicht (1593) zum Wiedergeben des Ausgabebildes (D) in einem Puffer (1591), der durch die Anzeige (1100) abgetastet wird; und
Ausgeben des Ausgabebildes (D) auf die Anzeige (1100) durch Wiedergeben des Ausgabebildes (D) auf der Wiedergabeschicht (1593).

2. Verfahren nach Anspruch 1, wobei das Erhalten der Eingabekoordinaten (xₙ) entsprechend den Positionskoordinaten, an denen das Berührungsereignis auftritt, und der Berührungseigenschaften (vₙ) entsprechend den Berührungsinformationen des Berührungsereignisses basierend auf der Berührungseingabe (TI) Folgendes umfasst:
Erhalten der Eingabekoordinaten (xₙ) basierend auf einer Kontaktposition des Berührungsereignisses auf der Anzeige (1100); und
Erhalten der Berührungseigenschaften (vₙ) des Berührungsereignisses,
wobei die Berührungseigenschaften (vₙ) Folgendes umfassen:
zumindest eines von einem Zeitstempel des Berührungsereignisses,
einer Dauer des Berührungsereignisses (TS),
einem Zeitintervall zwischen dem Berührungsereignis und einem anderen Berührungsereignis benachbart dazu auf einer Zeitleiste,
einem Kontaktwinkel des Berührungsereignisses,
einer Richtung eines Kontaktgradienten des Berührungsereignisses, und
einem Druck, der auf eine Kontaktfläche des Berührungsereignisses ausgeübt wird.

3. Verfahren nach Anspruch 1, wobei das Erhalten der Eingabekoordinaten (xₙ) entsprechend den Positionskoordinaten, an denen das Berührungsereignis auftritt, und der Berührungseigenschaften (vₙ) entsprechend den Berührungsinformationen des Berührungsereignisses basierend auf der Berührungseingabe (TI) Folgendes umfasst:
Erhalten der Eingabekoordinaten (xₙ) basierend auf einer Kontaktposition des Berührungsereignisses auf der Anzeige (1100);
Entfernen eines Berührungsereignisses mit den Eingabekoordinaten (xₙ), die nicht geändert werden, durch Filtern des Berührungsereignisses; und
Erhalten von Berührungseigenschaften (vₙ) des gefilterten Berührungsereignisses.

4. Verfahren nach Anspruch 1, wobei das Erhalten der Eingabekoordinaten (xₙ) entsprechend den Positionskoordinaten, an denen das Berührungsereignis auftritt, und der Berührungseigenschaften (vₙ) entsprechend den Berührungsinformationen des Berührungsereignisses basierend auf der Berührungseingabe (TI) Folgendes umfasst:
Erhalten der Eingabekoordinaten (xₙ) basierend auf einer Kontaktposition des Berührungsereignisses auf der Anzeige (1100);
Entfernen eines Berührungsereignisses mit den Eingabekoordinaten (xₙ), die nicht geändert werden, durch Filtern des Berührungsereignisses;
Normalisieren von Eingabekoordinaten (xₙ) des gefilterten Berührungsereignisses; und
Erhalten von Berührungseigenschaften (vₙ) des gefilterten Berührungsereignisses.

5. Verfahren nach Anspruch 1, wobei das Erhalten der vorhergesagten Koordinaten (pₙ₊₁) des Berührungsereignisses nach dem zumindest einen Rahmen basierend auf den Eingabekoordinaten (xₙ) und den Berührungseigenschaften (vₙ) Folgendes umfasst:
Erhalten der Eingabekoordinaten (xₙ) und der Berührungseigenschaften (vₙ) durch ein rekurrentes neuronales Netzwerk (RNN) (1550), das zumindest eines von einer Architektur mit langem Kurzzeitspeicher (LSTM) (1500) und einer Architektur mit rekurrenter Gate-Einheit (GRU) umfasst.

6. Verfahren nach Anspruch 1, wobei das Erhalten der vorhergesagten Koordinaten (pₙ₊₁) des Berührungsereignisses nach dem zumindest einen Rahmen basierend auf den Eingabekoordinaten (xₙ) und den Berührungseigenschaften (vₙ) Erhalten der vorhergesagten Koordinaten (pₙ₊₁) basierend auf einer Datenbank (1570) umfasst, die statistische Benutzereingabedaten umfasst.

7. Verfahren nach Anspruch 1, wobei das Erhalten der Ausgabekoordinaten (yₙ) des Bildes, das auf der Anzeige (1100) anzuzeigen ist, basierend auf den Eingabekoordinaten (xₙ) und den vorhergesagten Koordinaten (pₙ₊₁) Erhalten der Ausgabekoordinaten (yₙ) durch Gewichtskombinieren der Eingabekoordinaten (xₙ) mit den vorhergesagten Koordinaten (pₙ₊₁) umfasst.

8. Vorrichtung (1000) zur Reduzierung der Ausgabeverzögerung einer Berührungseingabe (TI) einer Anzeige (1100), wobei die Vorrichtung (1000) Folgendes umfasst:
eine Anzeige (1100), umfassend:
ein Eingabemodul (1130), das dazu konfiguriert ist, ein Berührungsereignis von einer externen Quelle zu empfangen, und
ein Ausgabemodul (1150), das dazu konfiguriert ist, ein Bild auszugeben;
einen Speicher (1500), der dazu konfiguriert ist, ein Programm zu speichern, das eine oder mehrere Anweisungen umfasst; und
zumindest einen Prozessor (1300), der dazu konfiguriert ist, die eine oder mehreren Anweisungen des Programms, das in dem Speicher (1500) gespeichert ist, auszuführen,
wobei der Prozessor (1300) ferner durch Ausführen der einen oder mehreren Anweisungen zu Folgendem konfiguriert ist:
Empfangen des Berührungsereignisses als eine Berührungseingabe (TI) durch Steuern des Eingabemoduls (1130),
Erhalten von Eingabekoordinaten (xₙ) entsprechend Positionskoordinaten, an denen das Berührungsereignis auftritt, und Berührungseigenschaften (vₙ) entsprechend Berührungsinformationen des Berührungsereignisses, basierend auf der Berührungseingabe (TI),
Erhalten von vorhergesagten Koordinaten (pₙ₊₁) eines Berührungsereignisses nach zumindest einem Rahmen, basierend auf den Eingabekoordinaten (xₙ) und den Berührungseigenschaften (vₙ),
Erhalten von Ausgabekoordinaten (yₙ) eines Bildes, das auf der Anzeige (1100) anzuzeigen ist, basierend auf den Eingabekoordinaten (xₙ) und den vorhergesagten Koordinaten (pₙ₊₁),
Erhalten eines Ausgabebildes (D) basierend auf den Ausgabekoordinaten (yₙ) und den Berührungseigenschaften (vₙ), und
**dadurch gekennzeichnet, dass** der Prozessor (1300) zu Folgendem konfiguriert ist:
Erzeugen einer Wiedergabeschicht (1593) zum Wiedergeben des Ausgabebildes (D) in einem Puffer (1591), der durch die Anzeige (1100) abgetastet wird, und
Ausgeben des Ausgabebildes (D) auf die Anzeige (1100) durch Wiedergeben des Ausgabebildes (D) auf der Wiedergabeschicht (1593).

9. Vorrichtung (1000) nach Anspruch 8, wobei der Prozessor (1300) ferner durch Ausführen der einen oder mehreren Anweisungen zu Folgendem konfiguriert ist:
Erhalten der Eingabekoordinaten (xₙ) basierend auf einer Kontaktposition des Berührungsereignisses auf der Anzeige (1100); und
Erhalten der Berührungseigenschaften (vₙ) des Berührungsereignisses,
wobei die Berührungseigenschaften (vₙ) Folgendes umfassen:
zumindest eines von einem Zeitstempel des Berührungsereignisses,
einer Dauer des Berührungsereignisses Ts,
einem Zeitintervall zwischen dem Berührungsereignis und einem anderen Berührungsereignis benachbart dazu auf einer Zeitleiste,
einem Kontaktwinkel des Berührungsereignisses,
einer Richtung eines Kontaktgradienten des Berührungsereignisses, und
einem Druck, der auf eine Kontaktfläche des Berührungsereignisses ausgeübt wird.

10. Vorrichtung (1000) nach Anspruch 8, wobei der Prozessor (1300) ferner durch Ausführen der einen oder mehreren Anweisungen zu Folgendem konfiguriert ist:
Erhalten der Eingabekoordinaten (xₙ) basierend auf einer Kontaktposition des Berührungsereignisses auf der Anzeige 1100,
Entfernen eines Berührungsereignisses mit den Eingabekoordinaten (xₙ), die nicht geändert werden, durch Filtern des Berührungsereignisses, und
Erhalten der Berührungseigenschaften (vₙ) des gefilterten Berührungsereignisses.

11. Vorrichtung (1000) nach Anspruch 8, wobei der Prozessor (1300) ferner durch Ausführen der einen oder mehreren Anweisungen zu Folgendem konfiguriert ist:
Erhalten der Eingabekoordinaten (xₙ) basierend auf einer Kontaktposition des Berührungsereignisses auf der Anzeige (1100),
Entfernen eines Berührungsereignisses mit den Eingabekoordinaten (xₙ), die nicht geändert werden, durch Filtern des Berührungsereignisses,
Normalisieren von Eingabekoordinaten (xₙ) des gefilterten Berührungsereignisses, und
Erhalten der Berührungseigenschaften (vₙ) des gefilterten Berührungsereignisses.

12. Vorrichtung (1000) nach Anspruch 8, wobei der Prozessor (1300) ferner durch Ausführen der einen oder mehreren Anweisungen zu Folgendem konfiguriert ist,
Erhalten der Eingabekoordinaten (xₙ) und der Berührungseigenschaften (vₙ) durch ein rekurrentes neuronales Netzwerk (RNN) (1550), das zumindest eines von einer Architektur mit langem Kurzzeitspeicher (LSTM) (1500) und einer Architektur mit rekurrenter Gate-Einheit (GRU) umfasst.

13. Vorrichtung (1000) nach Anspruch 8, wobei der Prozessor (1300) ferner durch Ausführen der einen oder mehreren Anweisungen dazu konfiguriert ist, vorhergesagte Koordinaten (pₙ₊₁) basierend auf einer Datenbank (1570), die statistische Benutzereingabedaten umfasst, zu erhalten.

14. Vorrichtung (1000) nach Anspruch 8, wobei der Prozessor (1300) ferner durch Ausführen der einen oder mehreren Anweisungen dazu konfiguriert ist, die Ausgabekoordinaten (yₙ) durch Gewichtskombinieren der Eingabekoordinaten (xₙ) mit den vorhergesagten Koordinaten (pₙ₊₁) zu erhalten.

15. Computerlesbares Aufzeichnungsmedium, auf dem ein Programm zum Ausführen des Verfahrens nach einem der Ansprüche 1 bis 7 auf einem Computer aufgezeichnet ist.

## Revendications

1. Procédé, réalisé par un dispositif (1000), de réduction d'un retard de sortie d'affichage d'une entrée tactile (TI), le procédé comprenant :
la réception d'un événement tactile en tant qu'entrée tactile (TI) ;
l'obtention de coordonnées d'entrée (xₙ) correspondant à des coordonnées de position où l'événement tactile se produit et de caractéristiques tactiles (vₙ) correspondant à des informations tactiles de l'événement tactile, sur la base de l'entrée tactile (TI) ;
l'obtention de coordonnées prédites (pₙ₊₁) d'un événement tactile après au moins une trame, sur la base des coordonnées d'entrée (xₙ) et des caractéristiques tactiles (vₙ) ;
l'obtention de coordonnées de sortie (yₙ) d'une image à afficher sur le dispositif d'affichage (1100) sur la base des coordonnées d'entrée (xₙ) et des coordonnées prédites (pₙ₊₁) ;
l'obtention d'une image de sortie (D) sur la base des coordonnées de sortie (yₙ) et des caractéristiques tactiles (vₙ) ; et
**caractérisé par** le procédé comprenant en outre :
la génération d'une couche de rendu (1593) permettant de rendre l'image de sortie (D) dans un tampon (1591) balayé par le dispositif d'affichage (1100) ; et
l'émission en sortie de l'image de sortie (D) sur le dispositif d'affichage (1100) en rendant de l'image de sortie (D) sur la couche de rendu (1593).

2. Procédé de la revendication 1, dans lequel l'obtention des coordonnées d'entrée (xₙ) correspondant aux coordonnées de position où l'événement tactile se produit et des caractéristiques tactiles (vₙ) correspondant aux informations tactiles de l'événement tactile, sur la base de l'entrée tactile (TI), comprend :
l'obtention des coordonnées d'entrée (xₙ) sur la base d'une position de contact de l'événement tactile sur le dispositif d'affichage (1100) ; et
l'obtention des caractéristiques tactiles (vₙ) de l'événement tactile,
dans lequel les caractéristiques tactiles (vₙ) comprennent :
au moins l'un parmi un horodatage de l'événement tactile,
une durée de l'événement tactile (TS),
un intervalle de temps entre l'événement tactile et un autre événement tactile adjacent à celui-ci sur une chronologie,
un angle de contact de l'événement tactile,
une direction d'un gradient de contact de l'événement tactile, et
une pression appliquée sur une surface de contact de l'événement tactile.

3. Procédé de la revendication 1, dans lequel l'obtention des coordonnées d'entrée (xₙ) correspondant aux coordonnées de position où l'événement tactile se produit et des caractéristiques tactiles (vₙ) correspondant aux informations tactiles de l'événement tactile, sur la base de l'entrée tactile (TI), comprend :
l'obtention des coordonnées d'entrée (xₙ) sur la base d'une position de contact de l'événement tactile sur le dispositif d'affichage (1100) ;
la suppression d'un événement tactile présentant les coordonnées d'entrée (xₙ) qui ne sont pas modifiées, en filtrant l'événement tactile ; et
l'obtention de caractéristiques tactiles (vₙ) de l'événement tactile filtré.

4. Procédé de la revendication 1, dans lequel l'obtention des coordonnées d'entrée (xₙ) correspondant aux coordonnées de position où l'événement tactile se produit et des caractéristiques tactiles (vₙ) correspondant aux informations tactiles de l'événement tactile, sur la base de l'entrée tactile (TI), comprend :
l'obtention des coordonnées d'entrée (xₙ) sur la base d'une position de contact de l'événement tactile sur le dispositif d'affichage (1100) ;
la suppression d'un événement tactile présentant les coordonnées d'entrée (xₙ) qui ne sont pas modifiées, en filtrant l'événement tactile ;
la normalisation de coordonnées d'entrée (xₙ) de l'événement tactile filtré ; et
l'obtention de caractéristiques tactiles (vₙ) de l'événement tactile filtré.

5. Procédé de la revendication 1, dans lequel l'obtention des coordonnées prédites (pₙ₊₁) de l'événement tactile après l'au moins une trame, sur la base des coordonnées d'entrée (xₙ) et des caractéristiques tactiles (vₙ), comprend :
l'obtention des coordonnées d'entrée (xₙ) et des caractéristiques tactiles (vₙ) au travers d'un réseau neuronal récurrent (RNN) (1550) comprenant au moins l'une parmi une architecture de mémoire à long terme (LSTM) (1500) et une architecture d'unité récurrente de porte (GRU).

6. Procédé de la revendication 1, dans lequel l'obtention des coordonnées prédites (pₙ₊₁) de l'événement tactile après l'au moins une trame, sur la base des coordonnées d'entrée (xₙ) et des caractéristiques tactiles (vₙ), comprend l'obtention des coordonnées prédites (pₙ₊₁) sur la base d'une base de données (1570) comprenant des données d'entrée utilisateur statistiques.

7. Procédé de la revendication 1, dans lequel l'obtention des coordonnées de sortie (yₙ) de l'image à afficher sur le dispositif d'affichage (1100) sur la base des coordonnées d'entrée (xₙ) et des coordonnées prédites (pₙ₊₁) comprend l'obtention des coordonnées de sortie (yₙ) en combinant par pondération les coordonnées d'entrée (xₙ) avec les coordonnées prédites (pₙ₊₁).

8. Dispositif (1000) de réduction d'un retard de sortie d'affichage (1100) d'une entrée tactile (TI), le dispositif (1000) comprenant :
un dispositif d'affichage (1100) comprenant :
un module d'entrée (1130) configuré pour recevoir un événement tactile à partir d'une source extérieure, et
un module de sortie (1150) configuré pour émettre une image en sortie ;
une mémoire (1500) configurée pour stocker un programme comprenant une ou plusieurs instructions ; et
au moins un processeur (1300) configuré pour exécuter les une ou plusieurs instructions du programme stockées dans la mémoire (1500),
dans lequel le processeur (1300) est en outre configuré pour, en exécutant les une ou plusieurs instructions :
recevoir l'événement tactile en tant qu'entrée tactile (TI) en commandant le module d'entrée (1130),
obtenir des coordonnées d'entrée (xₙ) correspondant à des coordonnées de position où l'événement tactile se produit et des caractéristiques tactiles (vₙ) correspondant à des informations tactiles de l'événement tactile, sur la base de l'entrée tactile (TI),
obtenir des coordonnées prédites (pₙ₊₁) d'un événement tactile après au moins une trame, sur la base des coordonnées d'entrée (xₙ) et des caractéristiques tactiles (vₙ),
obtenir des coordonnées de sortie (yₙ) d'une image à afficher sur le dispositif d'affichage (1100) sur la base des coordonnées d'entrée (xₙ) et des coordonnées prédites (pₙ₊₁),
obtenir une image de sortie (D) sur la base des coordonnées de sortie (yₙ) et des caractéristiques tactiles (vₙ), et
**caractérisé en ce que** le processeur (1300) est configuré pour :
générer une couche de rendu (1593) permettant de rendre l'image de sortie (D) dans un tampon (1591) balayé par le dispositif d'affichage (1100), et
émettre en sortie l'image de sortie (D) sur le dispositif d'affichage (1100) en rendant de l'image de sortie (D) sur la couche de rendu (1593).

9. Dispositif (1000) de la revendication 8, dans lequel le processeur (1300) est en outre configuré pour, en exécutant les une ou plusieurs instructions :
obtenir les coordonnées d'entrée (xₙ) sur la base d'une position de contact de l'événement tactile sur le dispositif d'affichage (1100) ; et
obtenir les caractéristiques tactiles (vₙ) de l'événement tactile,
dans lequel les caractéristiques tactiles (vₙ) comprennent :
au moins l'un parmi un horodatage de l'événement tactile,
une durée de l'événement tactile Ts,
un intervalle de temps entre l'événement tactile et un autre événement tactile adjacent à celui-ci sur une chronologie,
un angle de contact de l'événement tactile,
une direction d'un gradient de contact de l'événement tactile, et
une pression appliquée sur une surface de contact de l'événement tactile.

10. Dispositif (1000) de la revendication 8, dans lequel le processeur (1300) est en outre configuré pour, en exécutant les une ou plusieurs instructions :
obtenir les coordonnées d'entrée (xₙ) sur la base d'une position de contact de l'événement tactile sur le dispositif d'affichage 1100,
supprimer un événement tactile présentant les coordonnées d'entrée (xₙ) qui ne sont pas modifiées, en filtrant l'événement tactile, et
obtenir les caractéristiques tactiles (vₙ) de l'événement tactile filtré.

11. Dispositif (1000) de la revendication 8, dans lequel le processeur (1300) est en outre configuré pour, en exécutant les une ou plusieurs instructions :
obtenir les coordonnées d'entrée (xₙ) sur la base d'une position de contact de l'événement tactile sur le dispositif d'affichage (1100),
supprimer un événement tactile présentant les coordonnées d'entrée (xₙ) qui ne sont pas modifiées, en filtrant l'événement tactile,
normaliser des coordonnées d'entrée (xₙ) de l'événement tactile filtré, et
obtenir les caractéristiques tactiles (vₙ) de l'événement tactile filtré.

12. Dispositif (1000) de la revendication 8, dans lequel le processeur (1300) est en outre configuré pour, en exécutant les une ou plusieurs instructions,
obtenir les coordonnées d'entrée (xₙ) et les caractéristiques tactiles (vₙ) au travers d'un réseau neuronal récurrent (RNN) (1550) comprenant au moins l'une parmi une architecture de mémoire à long terme (LSTM) (1500) et une architecture d'unité récurrente de porte (GRU).

13. Dispositif (1000) de la revendication 8, dans lequel le processeur (1300) est en outre configuré pour, en exécutant les une ou plusieurs instructions, obtenir des coordonnées prédites (pₙ₊₁) sur la base d'une base de données (1570) comprenant des données d'entrée utilisateur statistiques.

14. Dispositif (1000) de la revendication 8, dans lequel le processeur (1300) est en outre configuré pour, en exécutant les une ou plusieurs instructions, obtenir les coordonnées de sortie (yₙ) en combinant par pondération les coordonnées d'entrée (xₙ) avec les coordonnées prédites (pₙ₊₁).

15. Support d'enregistrement lisible par ordinateur sur lequel est enregistré un programme permettant d'exécuter le procédé selon l'une quelconque des revendications 1 à 7 sur un ordinateur.
